# EUROPEAN PATENT APPLICATION

(11) **EP 4 756 849 A2**
(43) Date of publication of application: **10.06.2026**
(21) Application number: 25219972.4
(22) Date of filing: 02.12.2025
(51) Int. Cl.: H01F 3/10, H01F 27/38, H01F 27/40, H01F 27/42, H02M 1/00, H02M 3/00

(54) **MAGNETIC COMPONENT AND INTEGRATED MAGNETIC ASSEMBLY**

(30) Priority: 05.12.2024 US 202463728316 P
(71) Applicant: DELTA ELECTRONICS, INC., 11491 Taipei (TW)
(72) Inventor: Jin, Feng, Morrisville, NC, 27560 (US); Phukan, Ripun, Morrisville, NC, 27560 (US); Kumar, Misha, Morrisville, NC, 27560 (US); Barbosa, Peter Mantovanelli, 320023 Taoyuan City (TW); Han, Shaopeng, Shanghai, 201209 (CN)
(74) Representative: Uexküll & Stolberg

(57) **Abstract**

The present disclosure relates to a magnetic component (1, 1a, 1b, 1c, 1d, 1c, 1f, 1g, 1h, 1i, 1j, 1k, 9, 10, 10a, 10b,10c, 81, 9a, 9b, 9c) and an integrated magnetic assembly (8, 8a, 8b, 8c). The magnetic component (1, 1a, 1b, 1c, 1d, 1e, 1f, 1g, 1h, 1i, 1j, 1k, 9, 10, 10a, 10b,10c, 81, 9a, 9b, 9c) includes a magnetic core set (2), a primary winding (3), a first secondary winding (4), a second secondary winding (5) and a tertiary winding (6). The magnetic core set (2) includes a central column (21), a first and a second lateral column (22, 23). The first lateral column (22) includes a first leg (221) and a second leg (222). The second lateral column (23) includes a third leg (231) and a fourth leg (232). A first segment (61) of the tertiary winding (6) is wound on one of the first leg (221) and the second leg (222), and a second segment (62) of the tertiary winding (6) is wound on one of the third leg (231) and the fourth leg (232). The two lateral columns (22, 23) are divided into two legs (221, 222, 231, 232) respectively to achieve partial coupling through the tertiary winding (6). Consequently, the advantages of adjustable and enhanced coupling coefficient, reduced loss, saving footprint and enhanced performance are achieved.

## Description

### FIELD OF THE INVENTION

The present disclosure relates to a magnetic component, and more particularly to a magnetic component with lower loss and enhanced performance. The present disclosure also relates to an integrated magnetic assembly using the magnetic component.

### BACKGROUND OF THE INVENTION

A current-doubler rectifier (CDR) is a power rectification topology used in DC-DC converters where the secondary winding of the transformer is center-tapped, and two switches and inductors are employed to rectify the AC power into DC power. The CDR topology effectively doubles the output current compared to conventional rectification while reducing transformer losses and improving efficiency, making it ideal for high-current, low-voltage applications.

Generally, a plurality of magnetic components such as transformer and inductors are employed in the CDR topology. The transformer is used for isolation and voltage step-down. In traditional implementations, the transformer and the inductors are separate components, resulting in a bulky structure and reduced efficiency. However, integrated designs, where the inductors are combined, and in some cases where the transformer and the inductors are integrated, offer significant performance improvements.

Research has also shown that coupled magnetic components help improve the dynamic performance of the DC-DC converter. A smaller current ripple and faster transient response is achieved with the coupled magnetic component. However, the conventional coupled magnetic component requires a complex winding path, leading to longer wire lengths, increased losses, and larger occupied space. In addition, when the magnetic component is designed, the coupling coefficient of the magnetic component is difficult to be adjusted and improved.

Therefore, there is a need of providing a magnetic component and an integrated magnetic assembly to obviate the drawbacks encountered from the prior arts.

### SUMMARY OF THE INVENTION

The present disclosure provides a magnetic component and an integrated magnetic assembly. The magnetic component can address the issues encountered from the prior arts and achieve the advantages of adjustable and/or enhanced coupling coefficient, reduced winding and core loss, saving footprint and enhanced performance. In addition, the magnetic component and the integrated magnetic assembly of the present disclosure are appliable to a CDR topology of DC-DC converter or multiphase buck converter applications. In some embodiments, the magnetic component is a fractional-winding planar transformer. The turn ratio of the magnetic component is capable of being adjusted according to the practical requirements. By using the magnetic component with the fractional-winding structure, the advantages of lower leakage inductance, lower winding and core loss, enhanced the power density and efficiency are achieved.

In accordance with an aspect of the present disclosure, a magnetic component is provided. The magnetic component includes a magnetic core set, a primary winding, a first secondary winding, a second secondary winding and a tertiary winding. The magnetic core set includes a central column, a first lateral column and a second lateral column. A first winding channel is formed between the central column and the first lateral column. A second winding channel is formed between the central column and the second lateral column. The first lateral column includes a first leg, a second leg and a first sub-winding channel disposed between the first leg and the second leg. The second lateral column includes a third leg, a fourth leg and a second sub-winding channel disposed between the third leg and the fourth leg. Portions of the primary winding are wound through the first winding channel and the second winding channel. Portion of the first secondary winding is wound through the first winding channel. Portion of the second secondary winding is wound through the second winding channel, and the second secondary winding is connected to the first secondary winding. The tertiary winding includes a first segment and a second segment. The first segment is wound on one of the first leg and the second leg, and the second segment is wound on one of the third leg and the fourth leg.

In accordance with another aspect of the present disclosure, a magnetic component is provided. The magnetic component includes a magnetic core set, a primary winding, a first secondary winding, a second secondary winding and a tertiary winding. The magnetic core set includes a central column, a first lateral column and a second lateral column. A first winding channel is formed between the central column and the first lateral column. A second winding channel is formed between the central column and the second lateral column. Portions of the primary winding are wound through the first winding channel and the second winding channel. Portion of the first secondary winding is wound through the first winding channel. Portion of the second secondary winding is wound through the second winding channel, and the second secondary winding is connected to the first secondary winding. The tertiary winding is wound on the central column or wound on the first lateral column and the second lateral column.

In an embodiment, the magnetic core set further includes a first plate and a second plate, wherein the central column, the first lateral column and the second lateral column are connected between the first plate and the second plate respectively, and the central column is disposed between the first lateral column and the second lateral column.

In an embodiment, the magnetic component includes an auxiliary inductor configured to adjust a coupling coefficient of the magnetic component, wherein the auxiliary inductor is a trace inductor electrically connected to the tertiary winding, or wherein the auxiliary inductor comprises an inductor magnetic core having a channel passing therethrough, and a portion of the tertiary winding is wound through the channel of the inductor magnetic core, or wherein the auxiliary inductor is a discrete inductor and comprises an inductor magnetic core and an inductor winding, the inductor magnetic core comprises EE cores, EI cores or PQ cores, and the inductor winding is electrically connected to the tertiary winding and wound around a magnetic leg of the inductor magnetic core for one turn or a plurality of turns.

In an embodiment, the primary winding is wound on the central column or wound on the first lateral column and the second lateral column, the first secondary winding is wound on the first lateral column, and the second secondary winding is wound on the second lateral column.

In an embodiment, the tertiary winding has a first segment wound on the first lateral column and a second segment wound on the second lateral column, wherein the current flows through the first segment of the tertiary winding in a first direction, and the current flows through the second segment of the tertiary winding in a second direction, wherein the first direction and the second direction are opposite to each other.

In an embodiment, the primary winding is wound on the central column, the first secondary winding is wound on the first lateral column, the second secondary winding is wound on the second lateral column, a first segment of the tertiary winding is wound on the first lateral column, and a second segment of the tertiary winding is wound on the second lateral column.

In an embodiment, the primary winding is wound on the central column, the first secondary winding is wound on the first lateral column, the second secondary winding is wound on the second lateral column, and the tertiary winding is wound on the central column.

In an embodiment, the magnetic component further includes at least one printed circuit board, wherein at least one of the primary winding, the first secondary winding, the second secondary winding and the tertiary winding is disposed in the at least one printed circuit board.

In an embodiment, the primary winding, the first secondary winding, the second secondary winding and the tertiary winding are conductive sheets, respectively.

In an embodiment, the magnetic component is a PCB-based planar transformer.

In accordance with another aspect of the present disclosure, an integrated magnetic assembly is provided. The integrated magnetic assembly includes at least two magnetic components. Each of the at least two magnetic components includes the above-mentioned structures. The first lateral column of one magnetic component and the second lateral column of the adjacent magnetic component are connected with each other to form a common column. The tertiary windings of the at least two magnetic components are connected in series.

In accordance with a further aspect of the present disclosure, a magnetic component is provided. The magnetic component includes a magnetic core set, a primary winding, a first secondary winding and a second secondary winding. The magnetic core set includes a central column, a first lateral column and a second lateral column. A first winding channel is formed between the central column and the first lateral column. A second winding channel is formed between the central column and the second lateral column. The first lateral column includes a first leg, a second leg and a first sub-winding channel disposed between the first leg and the second leg. The second lateral column includes a third leg, a fourth leg and a second sub-winding channel disposed between the third leg and the fourth leg. The primary winding is wound on the central column, and wound on one of the first leg and the second leg and one of the third leg and the fourth leg. Portion of the first secondary winding is wound through the first winding channel. Portion of the second secondary winding is wound through the second winding channel, and the second secondary winding is connected to the first secondary winding.

In accordance with another aspect of the present disclosure, a magnetic component is provided. The magnetic component includes a magnetic core set, a first inductor winding, a second inductor winding and a tertiary winding. The magnetic core set includes a central column, a first lateral column and a second lateral column. A first winding channel is formed between the central column and the first lateral column. A second winding channel is formed between the central column and the second lateral column. The first lateral column includes a first leg, a second leg and a first sub-winding channel disposed between the first leg and the second leg. The second lateral column includes a third leg, a fourth leg and a second sub-winding channel disposed between the third leg and the fourth leg. Portion of the first inductor winding is wound through the first winding channel. Portion of the second inductor winding is wound through the second winding channel, and the second inductor winding is connected to the first inductor winding. The tertiary winding includes a first segment and a second segment. The first segment is wound on one of the first leg and the second leg, and the second segment is wound on one of the third leg and the fourth leg.

The above contents of the present disclosure will become more readily apparent to those ordinarily skilled in the art after reviewing the following detailed description and accompanying drawings, in which:

### BRIEF DESCRIPTION OF THE DRAWINGS

FIG. 1A is a cross-sectional view illustrating a magnetic component according to a first embodiment of the present disclosure;
FIG. 1B is a schematic circuit view of an exemplary DC-DC converter with a current-doubler rectifier that uses the magnetic component of FIG. 1A;
FIG. 1C is a schematic perspective view illustrating the magnetic core set of the magnetic component of FIG. 1A;
FIG. 1D is a schematic perspective view illustrating the directions of the current drawn through the windings of the magnetic component of FIG. 1A;
FIG. 1E is a schematic circuit view illustrating partial coupling among the inductances induced by the windings of the magnetic component of FIG. 1A;
FIG. 1F shows the magnetic reluctance model of the magnetic component of FIG. 1A after implementing partial coupling;
FIG. 1G shows an exemplary auxiliary inductor coupled to the tertiary winding of the magnetic component of FIG. 1A;
FIG. 2A is a schematic perspective view illustrating a magnetic component according to a second embodiment of the present disclosure;
FIG. 2B is a schematic perspective view illustrating a magnetic component according to a third embodiment of the present disclosure;
FIG. 2C is a schematic perspective view illustrating a magnetic component according to a fourth embodiment of the present disclosure;
FIG. 2D is a schematic perspective view illustrating a magnetic component according to a fifth embodiment of the present disclosure;
FIG. 3 is a schematic perspective view illustrating a magnetic component according to a sixth embodiment of the present disclosure;
FIG. 4A is a schematic perspective view illustrating a magnetic component according to a seventh embodiment of the present disclosure;
FIG. 4B is a schematic perspective view illustrating a magnetic component according to an eighth embodiment of the present disclosure;
FIG. 5A is a schematic circuit view of an exemplary power converter including multiple modules connected in parallel, wherein a tertiary winding of an integrated magnetic assembly is used to link all modules together;
FIG. 5B is a schematic perspective view illustrating an integrated magnetic assembly according to a first embodiment of the present disclosure;
FIG. 5C is a schematic perspective view illustrating an integrated magnetic assembly according to a second embodiment of the present disclosure;
FIG. 6A is a schematic perspective view illustrating a magnetic component according to a nineth embodiment of the present disclosure;
FIG. 6B is a schematic perspective view illustrating the directions of current drawn through the windings and the magnetic flux distribution on the magnetic component of FIG. 6A;
FIG. 6C is a schematic perspective view illustrating an integrated magnetic assembly according to a third embodiment of the present disclosure;
FIG. 7A is a schematic perspective view illustrating a magnetic component according to a tenth embodiment of the present disclosure;
FIG. 7B is a schematic perspective view illustrating the directions of current drawn through the windings and the magnetic flux distribution on the magnetic component of FIG. 7A;
FIG. 7C is a schematic perspective view illustrating a magnetic component according to an eleventh embodiment of the present disclosure;
FIG. 7D is a schematic perspective view illustrating the directions of current drawn through the windings and the magnetic flux distribution on the magnetic component of FIG. 7C;
FIG. 7E is a schematic perspective view illustrating a magnetic component according to a twelfth embodiment of the present disclosure;
FIG. 7F is a schematic perspective view illustrating the directions of current drawn through the windings and the magnetic flux distribution on the magnetic component of FIG. 7E;
FIG. 8 is a schematic perspective view illustrating an integrated magnetic assembly according to a fourth embodiment of the present disclosure;
FIGS. 9A, 9B, 9C and 10 show magnetic components for the coupled inductors of a two-phase buck converter, respectively;
FIG. 11A is a schematic perspective view illustrating a magnetic component according to a thirteenth embodiment of the present disclosure;
FIG. 11B is a schematic cross-sectional view illustrating the magnetic component of FIG. 11A;
FIG. 11C is a schematic perspective view illustrating a magnetic component according to a fourteenth embodiment of the present disclosure;
FIG. 12A is a schematic perspective view illustrating a magnetic component according to a fifteenth embodiment of the present disclosure; and
FIG. 12B is a schematic perspective view illustrating a magnetic component according to a sixteenth embodiment of the present disclosure.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed. Further, spatially relative terms, such as "upper," "lower," "front," "rear," "top," "bottom," and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. The apparatus may be otherwise oriented (rotated 90 degrees or at other orientations) and the spatially relative descriptors used herein may likewise be interpreted accordingly. When an element is referred to as being "connected," or "coupled," to another element, it can be directly connected or coupled to the other element or intervening elements may be present. Although the wide numerical ranges and parameters of the present disclosure are approximations, numerical values are set forth in the specific examples as precisely as possible. In addition, although the "first," "second" and the like terms in the claims be used to describe the various elements can be appreciated, these elements should not be limited by these terms, and these elements are described in the respective embodiments are used to express the different reference numerals, these terms are only used to distinguish one element from another element. For example, a first element could be termed a second element, and, similarly, a second element could be termed a first element, without departing from the scope of example embodiments. Besides, "and / or" and the like may be used herein for including any or all combinations of one or more of the associated listed items.

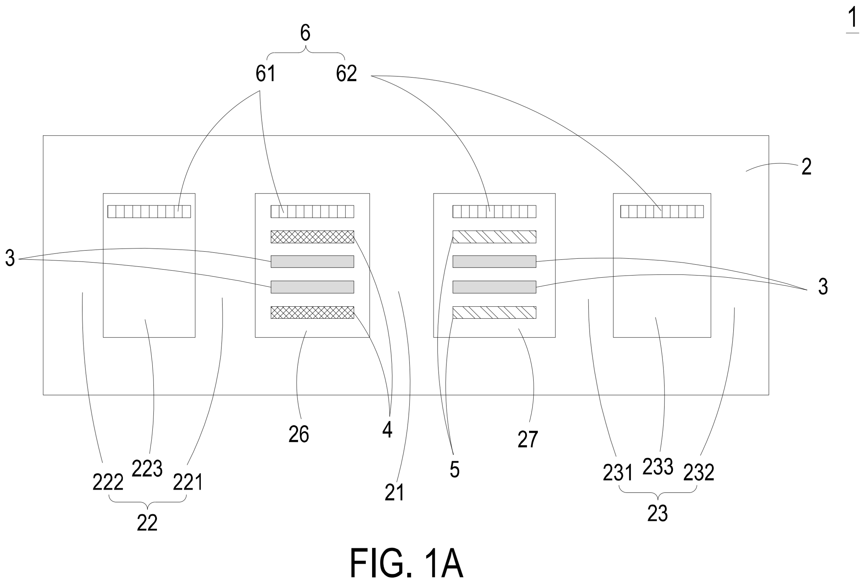

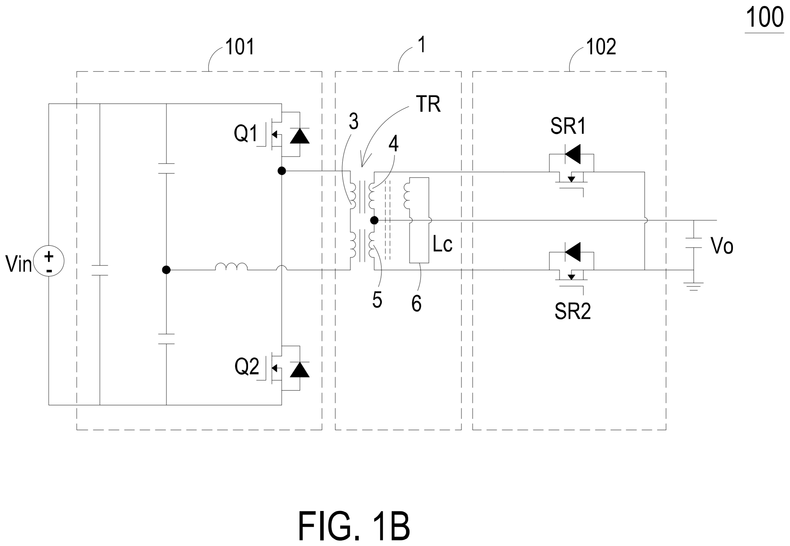

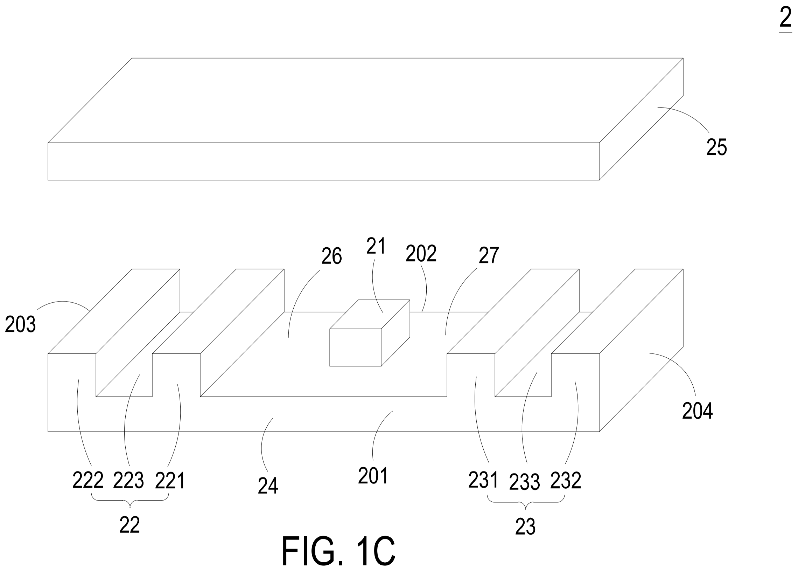

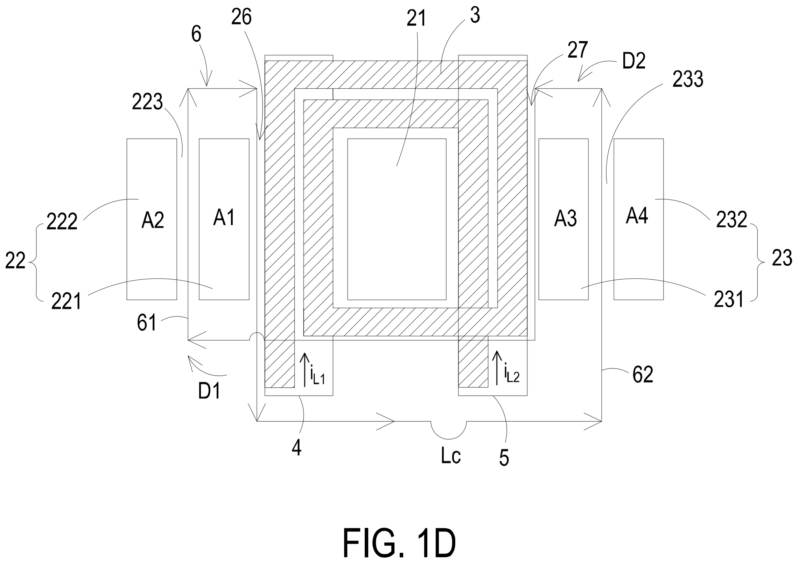

FIG. 1A is a cross-sectional view illustrating a magnetic component according to a first embodiment of the present disclosure. FIG. 1B is a schematic circuit view of an exemplary DC-DC converter with a current-doubler rectifier that uses the magnetic component of FIG. 1A. FIG. 1C is a schematic perspective view illustrating the magnetic core set of the magnetic component of FIG. 1A. FIG. 1D is a schematic perspective view illustrating the directions of the current drawn through the windings of the magnetic component of FIG. 1A. As shown in FIGS. 1A, 1B, 1C and 1D, the magnetic component 1 of the present disclosure is applicable to a DC-DC converter 100 with a current-doubler rectifier (CDR) or a multiphase buck converter with current-doubler rectifiers. The DC-DC converter 100 includes a primary circuit 101, a transformer TR and a secondary circuit 102. The primary circuit 101 receives an input voltage Vin and includes at least one switch arm. The switch arm includes an upper switch Q1 and a lower switch Q2 connected in series. The transformer TR includes a primary winding 3 and two secondary windings (i.e., a first secondary winding 4 and a second secondary winding 5). The primary winding 3 of the transformer TR is electrically connected to the switch arm. The secondary circuit 102 outputs an output voltage Vo and includes two switches SR1, SR2. The two secondary windings 4, 5 of the transformer TR are connected to the two switches SR1, SR2, respectively. The two secondary windings 4, 5 of the transformer TR and the two switches SR1, SR2 are collaboratively configured as the current-doubler rectifier. It is noted that the circuitry topology of the CDR is not limited to the above embodiment, and can be varied according to the practical requirements.

In the embodiment, the magnetic component 1 includes the above-mentioned transformer TR. The magnetic component 1 includes a magnetic core set 2, a primary winding 3, a first secondary winding 4, a second secondary winding 5 and a tertiary winding 6. The magnetic core set 2 includes a central column 21, a first lateral column 22 and a second lateral column 23. A first winding channel 26 is formed between the central column 21 and the first lateral column 22. A second winding channel 27 is formed between the central column 21 and the second lateral column 23. The first lateral column 22 includes a first leg 221, a second leg 222 and a first sub-winding channel 223 disposed between the first leg 221 and the second leg 222. The second lateral column 23 includes a third leg 231, a fourth leg 232 and a second sub-winding channel 233 disposed between the third leg 231 and the fourth leg 232. Namely, the first lateral column 22 and the second lateral column 23 are divided into two legs with a sub-winding channel therebetween, respectively. Portions of the primary winding 3 are wound through the first winding channel 26 and the second winding channel 27. Portion of the first secondary winding 4 is wound through the first winding channel 26.

Portion of the second secondary winding 5 is wound through the second winding channel 27, and the second secondary winding 5 is connected to the first secondary winding 4. The tertiary winding 6 is configured to adjust a coupling coefficient of the magnetic component 1 and includes a first segment 61 and a second segment 62. The first segment 61 is wound on one of the first leg 221 and the second leg 222, and the second segment 62 is wound on one of the third leg 231 and the fourth leg 232. Since the two lateral columns 22, 23 of the magnetic core set 2 are divided into two legs respectively to achieve partial coupling through the tertiary winding 6, the coupling coefficient of the magnetic component 1 is adjusted and/or enhanced.

In some embodiments, the primary winding 3 is wound on the central column 21, or wound on the first lateral column 22 and the second lateral column 23, or wound on one of the first leg 221 and the second leg 222 and one of the third leg 231 and the fourth leg 232. The first secondary winding 4 is wound on the central column 21 or the first lateral column 22. The second secondary winding 5 is wound on the central column 21 or the second lateral column 23.

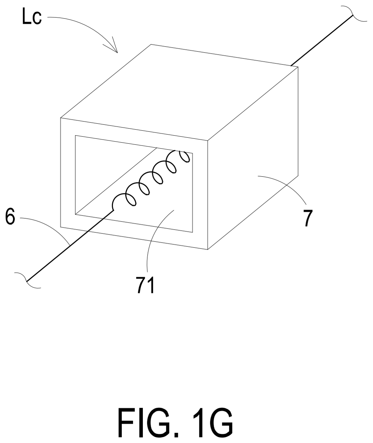

In some embodiments, the magnetic component 1 further includes an auxiliary inductor Lc configured to fine-adjust the coupling coefficient of the magnetic component 1. The auxiliary inductor Lc is a trace inductor or a discrete inductor. In an embodiment, the auxiliary inductor Lc is an extra winding electrically connected to the tertiary winding 6 to form the trace inductor (see FIG. 1D). In other embodiment, as shown in FIG. 1G, the auxiliary inductor Lc is a discrete inductor and includes an inductor magnetic core 7 having a channel 71 passing therethrough. Portion of the tertiary winding 6 is wound through the channel 71 of the inductor magnetic core 7. In some other embodiments, the auxiliary inductor Lc is a discrete inductor and includes an inductor magnetic core and an inductor winding. Preferably but not exclusively, the inductor magnetic core includes EE cores, EI cores or PQ cores. The inductor winding is electrically connected to the tertiary winding 6 and wound around a magnetic leg of the inductor magnetic core for one turn or a plurality of turns. It is noted that the structure of the auxiliary inductor Lc is not limited to the above embodiments, and can be varied according to the practical requirements.

In some embodiments, the magnetic core set 2 includes a first plate 24 and a second plate 25. The central column 21, the first lateral column 22 and the second lateral column 23 are connected between the first plate 24 and the second plate 25, respectively. The central column 21 is disposed between the first lateral column 22 and the second lateral column 23. The magnetic core set 2 includes a first side 201, a second side 202, a third side 203 and a fourth side 204. The first side 201 and the second side 202 are opposite to each other. The third side 203 and the fourth side 204 are opposite to each other. Preferably but not exclusively, the third side 203 and the fourth side 204 are in parallel with the extending direction of the first winding channel 26 and the second winding channel 27. The first sub-winding channel 223 and the second sub-winding channel 233 are adjacent to and in parallel with the third side 203 and the fourth side 204, respectively.

Alternatively, the first sub-winding channel 223 and the second sub-winding channel 233 in vertical to the third side 203 and the fourth side 204, respectively. In an embodiment, the magnetic core set 2 includes a first magnetic core part and a second magnetic core part connected with each other. Preferably but not exclusively, the first magnetic core part and the second magnetic core part are EE cores or EI cores. In an embodiment, the central column 21, the first lateral column 22, the second lateral column 23 and the first plate 24 are integrally formed into one piece to be served as the first magnetic core part, and the second plate 25 is served as the second magnetic core part. Alternatively, the central column 21, the first lateral column 22, the second lateral column 23 and the second plate 25 are integrally formed into one piece to be served as the first magnetic core part, and the first plate 24 is served as the second magnetic core part. It is noted that the structure of the magnetic core set 2 is not limited to the above-mentioned embodiments, and can be varied according to the practical requirements.

As shown in FIGS. 1A, 1B, 1C and 1D, in the embodiment, the primary winding 3 is wound around the central column 21, and portions of the primary winding 3 are wound through the first winding channel 26 and the second winding channel 27. Portion of the first secondary winding 4 is wound through the first winding channel 26. Portion of the second secondary winding 5 is wound through the second winding channel 27. The first secondary winding 4 and the second secondary winding 5 are connected to each other. The first segment 61 of the tertiary winding 6 is wound around the first leg 221, and portions of the first segment 61 are wound through the first sub-winding channel 223 and the first winding channel 26. The second segment 62 of the tertiary winding 6 is wound around the third leg 231, and portions of the second segment 62 are wound through the second sub-winding channel 233 and the second winding channel 27. The first segment 61 and the second segment 62 of the tertiary winding 6 are connected in series. In an embodiment, the primary winding 3 is wound on the central column 21 for at least two turns, and the first secondary winding 4 and the second secondary winding 5 includes one turn or a plurality of turns, respectively.

In some embodiments, portion of the first secondary winding 4 is wound through the first winding channel 26, and then the first secondary winding 4 is connected to the second secondary winding 5. In some other embodiments, the first secondary winding 4 is wound on the first lateral column 22 for at least one turn, and then the first secondary winding 4 is connected to the second secondary winding 5. Similarly, the above-mentioned winding method of the first secondary winding 4 is applicable to the second secondary winding 5. The tertiary winding 6 includes at least one turn. It is noted that the number of turns for the primary winding 3, the first secondary winding 4, the second secondary winding 5 and the tertiary winding 6, as well as the interleaving structure among primary winding 3, the first secondary winding 4, the second secondary winding 5 and the tertiary winding 6, are not limited to the configuration shown in FIGS. 1A and 1D, and the interleaving of the windings can be arranged based on the actual number of turns required.

In an embodiment, the current flows through the first segment 61 of the tertiary winding 6 in a first direction D1, and the current flows through the second segment 62 of the tertiary winding 6 in a second direction D2. The first direction D1 and the second direction D2 are opposite to each other. For instance, if the current drawn through the first segment 61 of the tertiary winding 6 on the first leg 221 flows in the clockwise direction, the current drawn through the second segment 62 of the tertiary winding 6 on the third leg 231 flows in the counterclockwise direction, and vice versa.

In some embodiments, the magnetic component 1 is a PCB-based planar transformer, but not limited thereto. The magnetic component 1 includes at least one printed circuit board (not shown). At least one of the primary winding 3, the first secondary winding 4, the second secondary winding 5 and the tertiary winding 6 is disposed in the at least one printed circuit board. The printed circuit board is a single-layer structure or a multilayer structure. Consequently, a PCB-based planar magnetic component using PCB windings is provided. In some other embodiments, the primary winding 3, the first secondary winding 4, the second secondary winding 5 and the tertiary winding 6 are conductive sheets, respectively. In some embodiments, the first leg 221 has a first cross-sectional area A1 in a direction parallel to the first plate 24, and the second leg 222 has a second cross-sectional area A2 in a direction parallel to the first plate 24. Preferably but not exclusively, the first cross-sectional area A1 is equal to the second cross-sectional area A2. The third leg 231 has a third cross-sectional area A3 in a direction parallel to the first plate 24, and the fourth leg 232 has a fourth cross-sectional area A4 in a direction parallel to the first plate 24. Preferably but not exclusively, the third cross-sectional area A3 is equal to the fourth cross-sectional area A4.

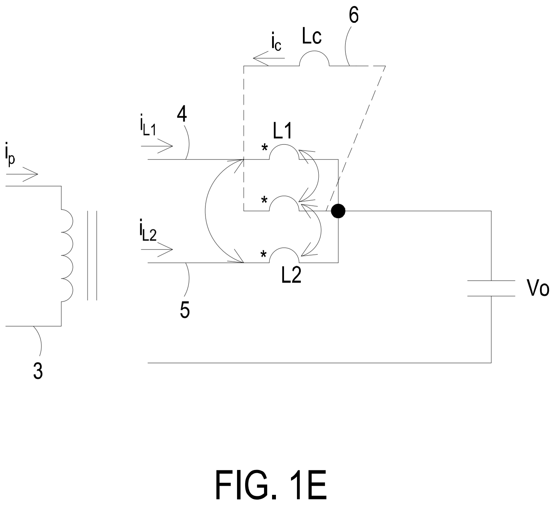

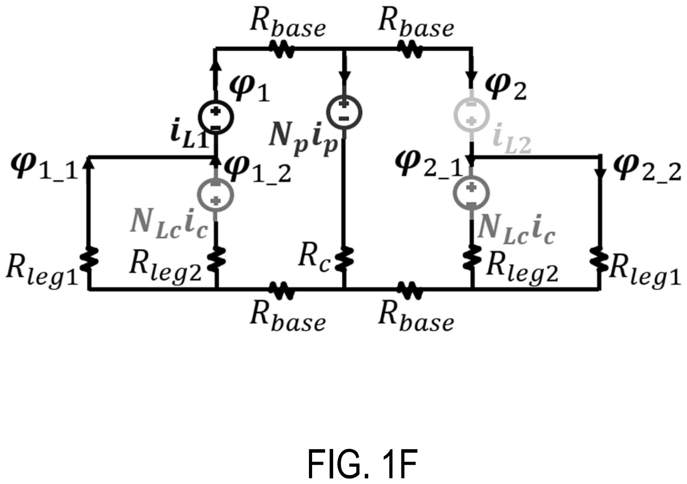

FIG. 1E is a schematic circuit view illustrating partial coupling among the inductances induced by the windings of the magnetic component of FIG. 1A. FIG. 1E shows the branches of the primary winding, the first secondary winding and the second secondary winding along with the branch of the tertiary winding. The primary winding 3 and the two secondary windings 4, 5 are tightly coupled, while the two secondary windings 4, 5 and the tertiary winding 6 are also mutually coupled. The coupling coefficient is determined by both the magnetic reluctance and the proportion of the core's cross-sectional area occupied by the tertiary winding 6 around the legs of the first lateral column 22 and the second lateral column 23. FIG. 1F shows the magnetic reluctance model of the magnetic component of FIG. 1A after implementing partial coupling. As shown in FIG. 1F, the legs 221, 222, 231, 232 of the two lateral column 22, 23 are considered to be identical and are represented by the leg reluctance R_{leg1}, R_{leg2}. R_{base} designates the reluctance of the first plate 24 and the second plate 25. In addition, iₚ designates the current drawn through the primary winding 3, i_{L1} designates the current drawn through the first secondary winding 4, i_{L2} designates the current drawn through the second secondary winding 5, and i_{c} designates the current drawn through the tertiary winding 6. The magnetic reluctance model demonstrates that the partial coupling affects the overall magnetic flux distribution and the coupling coefficients within the magnetic component 1.

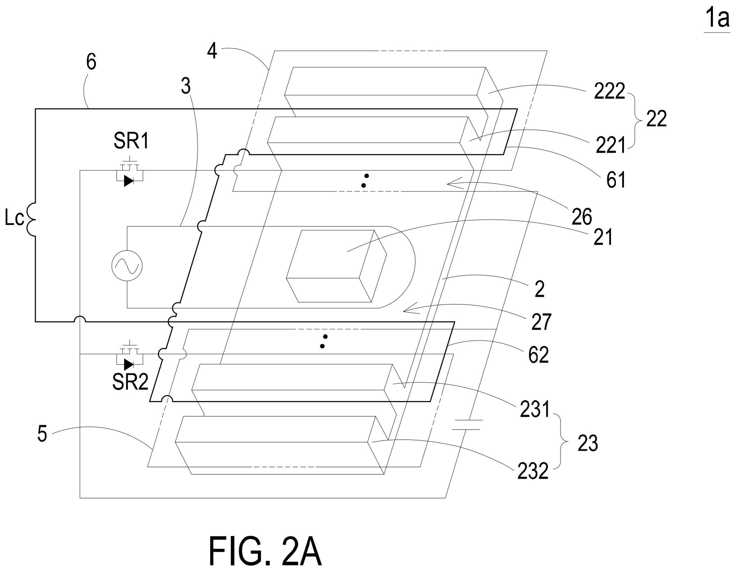

FIG. 2A is a schematic perspective view illustrating a magnetic component according to a second embodiment of the present disclosure. In the embodiment, the structures, elements and functions of the magnetic component 1a are similar to those of the magnetic component 1 of FIGS. 1A to 1G. The same reference numerals represent the same elements, and for the sake of brevity, detailed descriptions of the same elements are omitted. In the embodiment, the magnetic component 1a includes a magnetic core set 2, a primary winding 3, a first secondary winding 4, a second secondary winding 5 and a tertiary winding 6. The primary winding 3 is wound on the central column 21 for at least one turn (i.e., portions of the primary winding 3 are wound through the first winding channel 26 and the second winding channel 27). The first secondary winding 4 is wound on the first lateral column 22 for at least one turn (i.e., portion of the first secondary winding 4 is wound through the first winding channel 26). The second secondary winding 5 is wound on the second lateral column 23 for at least one turn (i.e., portion of the second secondary winding 5 is wound through the second winding channel 27). The second secondary winding 5 is connected to the first secondary winding 4. The tertiary winding 6 is configured to adjust a coupling coefficient of the magnetic component 1a and includes a first segment 61 and a second segment 62. The first segment 61 is wound on the first leg 221, and the second segment 62 is wound on the third leg 231. Namely, the first segment 61 and the second segment 62 of the tertiary winding 6 are positioned across the first leg 221 and the third leg 231 closer to the central column 21.

Compared with the magnetic component 1 of the first embodiment of FIG. 1A, the magnetic component 1a of this embodiment further include two switches SR1 and SR2 connected to the first secondary winding 4 and the second secondary winding 5 respectively. In addition, the two secondary windings 4, 5 are not restricted to one direct half turn; instead, the two secondary windings 4, 5 include multiple turns. Consequently, the loss associated with a half turn through this structure is reduced. The two lateral columns 22, 23 of the magnetic core set 2 are divided into two legs 221, 222, 231, 232 respectively to achieve partial coupling through the tertiary winding 6. Consequently, the coupling coefficient of the magnetic component 1a is adjusted and/or enhanced.

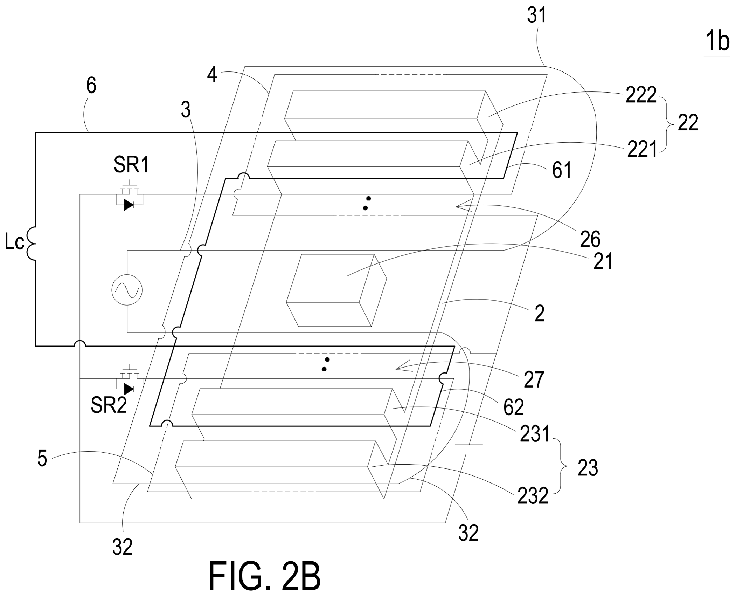

FIG. 2B is a schematic perspective view illustrating a magnetic component according to a third embodiment of the present disclosure. In the embodiment, the structures, elements and functions of the magnetic component 1b are similar to those of the magnetic component 1a of FIG. 2A, and are not redundantly described herein. In the embodiment, the magnetic component 1b includes a magnetic core set 2, a primary winding 3, a first secondary winding 4, a second secondary winding 5 and a tertiary winding 6. The primary winding 3 includes a first segment 31 and a second segment 32. The first segment 31 is wound on the first lateral column 22, and the second segment 32 is wound on the second lateral column 23. Namely, the primary winding 3 is split into two segments 31, 32 and wound across the lateral columns 22, 23. The first secondary winding 4 is wound on the first lateral column 22. The second secondary winding 5 is wound on the second lateral column 23, and connected to the first secondary winding 4. The tertiary winding 6 is configured to adjust a coupling coefficient of the magnetic component 1b and includes a first segment 61 and a second segment 62. The first segment 61 is wound on the first leg 221, and the second segment 62 is wound on the third leg 231. The two lateral columns 21, 22 of the magnetic core set 2 are divided into two legs 221, 222, 231, 232 respectively to achieve partial coupling through the tertiary winding 6 and the primary winding 3. Consequently, the coupling coefficient of the magnetic component 1b is adjusted and/or enhanced.

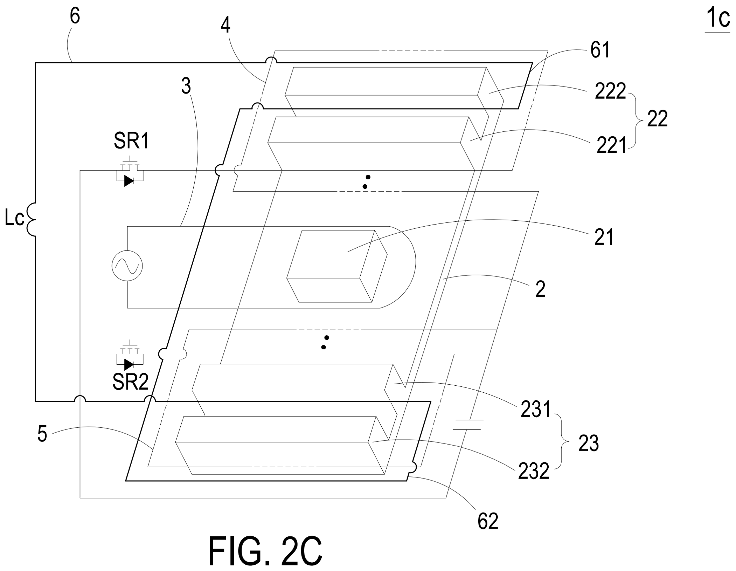

FIG. 2C is a schematic perspective view illustrating a magnetic component according to a fourth embodiment of the present disclosure. In the embodiment, the structures, elements and functions of the magnetic component 1c are similar to those of the magnetic component 1a of FIG. 2A, and are not redundantly described herein. In the embodiment, the magnetic component 1c includes a magnetic core set 2, a primary winding 3, a first secondary winding 4, a second secondary winding 5 and a tertiary winding 6. The primary winding 3 is wound on the central column 21. The first secondary winding 4 is wound on the first lateral column 22. The second secondary winding 5 is wound on the second lateral column 23, and connected to the first secondary winding 4. The tertiary winding 6 is configured to adjust a coupling coefficient of the magnetic component 1c and includes a first segment 61 and a second segment 62. The first segment 61 is wound on the second leg 222, and the second segment 62 is wound on the fourth leg 232. Namely, the first segment 61 and the second segment 62 of the tertiary winding 6 are positioned across the second leg 222 and the fourth leg 232 away from the central column 21. The two lateral columns 22, 23 of the magnetic core set 2 are divided into two legs 221, 222, 231, 232 respectively to achieve partial coupling through the tertiary winding 6. Consequently, the coupling coefficient of the magnetic component 1c is adjusted and/or enhanced.

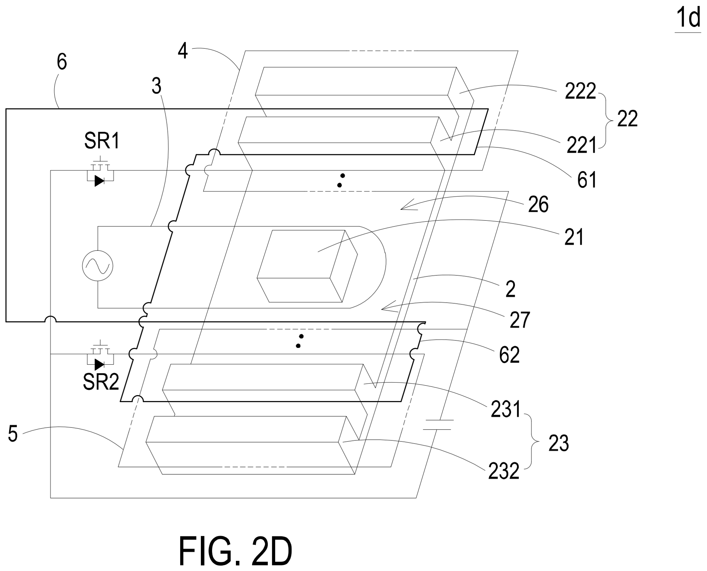

FIG. 2D is a schematic perspective view illustrating a magnetic component according to a fifth embodiment of the present disclosure. In the embodiment, the structures, elements and functions of the magnetic component 1d are similar to those of the magnetic component 1a of FIG. 2A, and are not redundantly described herein. Compared with the magnetic component 1a of FIG. 2A, the auxiliary inductor is omitted. Consequently, the magnetic component 1d with smaller footprint and lower loss is achieved.

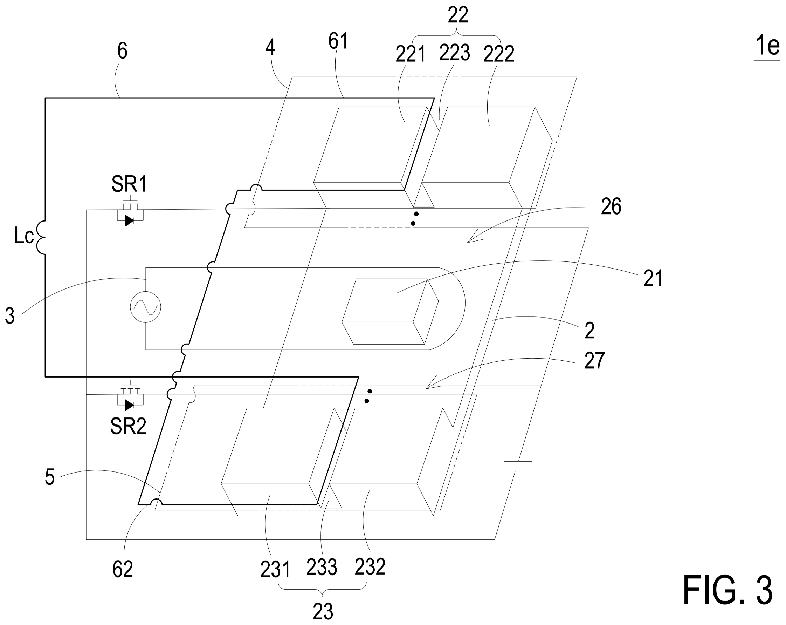

FIG. 3 is a schematic perspective view illustrating a magnetic component according to a sixth embodiment of the present disclosure. In the embodiment, the structures, elements and functions of the magnetic component 1e are similar to those of the magnetic component 1a of FIG. 2A, and are not redundantly described herein. In the embodiment, the magnetic component 1e includes a magnetic core set 2, a primary winding 3, a first secondary winding 4, a second secondary winding 5 and a tertiary winding 6. The first sub-winding channel 223 of the first lateral column 22 is in communication with the first winding channel 26, and the second sub-winding channel 233 of the second lateral column 23 is in communication with the second winding channel 27. In addition, the first sub-winding channel 223 and the second sub-winding channel 233 are in vertical with the first winding channel 26 and the second winding channel 27. The primary winding 3 is wound on the central column 21. The first secondary winding 4 is wound on the first lateral column 22. The second secondary winding 5 is wound on the second lateral column 23, and connected to the first secondary winding 4. The tertiary winding 6 is configured to adjust a coupling coefficient of the magnetic component 1e and includes a first segment 61 and a second segment 62. The first segment 61 is wound on the first leg 221, and the second segment 62 is wound on the third leg 231. The two lateral columns 22, 23 of the magnetic core set 2 are divided into two legs 221, 222, 231, 232 respectively to achieve partial coupling through the tertiary winding 6. Consequently, the coupling coefficient of the magnetic component 1e is adjusted and/or enhanced.

It is noted that the positions and winding method of the windings of the magnetic component 1e are not limited and can be varied according to the practical requirements. For example, the positions and winding method of the windings as shown in FIGS. 2B, 2C and 2D can be applied in the magnetic component 1e.

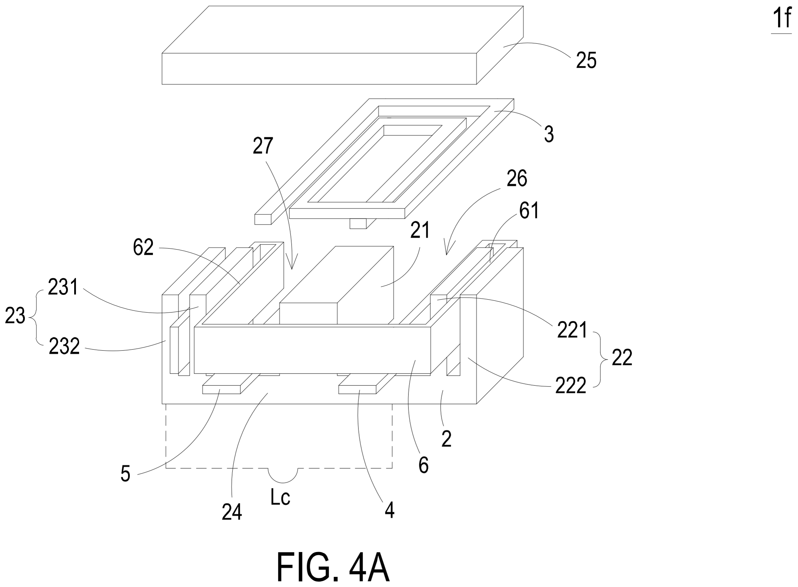

FIG. 4A is a schematic perspective view illustrating a magnetic component according to a seventh embodiment of the present disclosure. In the embodiment, the structures, elements and functions of the magnetic component 1f are similar to those of the magnetic component 1a of FIG. 2A. The same reference numerals represent the same components, and for the sake of brevity, detailed descriptions of the same components are omitted. In the embodiment, the magnetic component 1f includes a magnetic core set 2, a primary winding 3, a first secondary winding 4, a second secondary winding 5 and a tertiary winding 6. The primary winding 3 is wound on the central column 21 for at least two turns. Portion of the first secondary winding 4 is wound through the first winding channel 26 for at least half turn. Portion of the second secondary winding 5 is wound through the second winding channel 27 for at least half turn. The tertiary winding 6 is configured to adjust a coupling coefficient of the magnetic component 1f and includes a first segment 61 and a second segment 62. The first segment 61 is wound on the first leg 221, and the second segment 62 is wound on the third leg 231. In the embodiment, the tertiary winding 6 is vertical to the first plate 24 and/or the second plate 25. The two lateral columns 22, 23 of the magnetic core set 2 are divided into two legs 221, 222, 231, 232 respectively to achieve partial coupling through the tertiary winding 6. In addition, negative coupling is achieved based on the secondary windings 4, 5 and the tertiary winding 6. Consequently, the coupling coefficient of the magnetic component 1f is adjusted and/or enhanced. In some embodiments, an auxiliary inductor is omitted. Consequently, the advantages of saving footprint, low core and winding loss are achieved. In some other embodiments, an auxiliary inductor Lc such as a separate inductor or a trace inductor is coupled to the tertiary winding 6 and configured to fine-adjust the coupling among the secondary inductors.

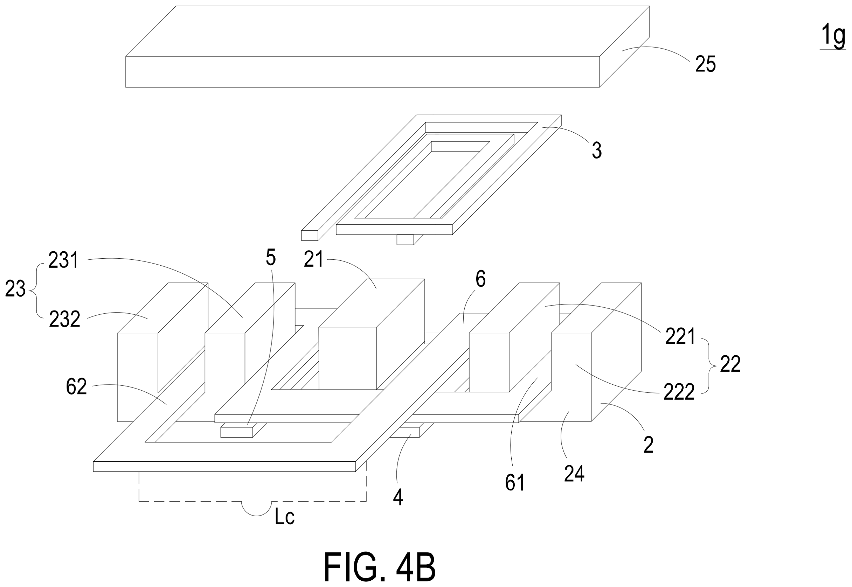

FIG. 4B is a schematic perspective view illustrating a magnetic component according to an eighth embodiment of the present disclosure. In the embodiment, the structures, elements and functions of the magnetic component 1g are similar to those of the magnetic component 1f of FIG. 4A. The same reference numerals represent the same elements, and for the sake of brevity, detailed descriptions of the same elements are omitted. Compared with the magnetic component 1f of FIG. 4A, the tertiary winding 6 of the magnetic component 1g is in parallel with the first plate 24 and/or the second plate 25. Namely, all the windings are planar, and the magnetic component 1g is a planar structure. Preferably but not exclusively, the magnetic component 1g is a PCB-based planar magnetic component with PCB windings therein.

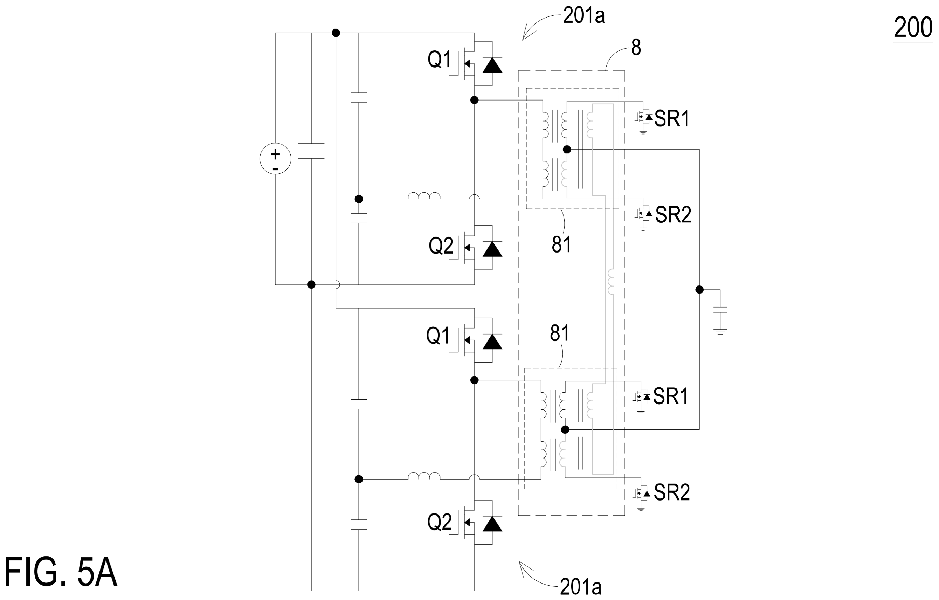

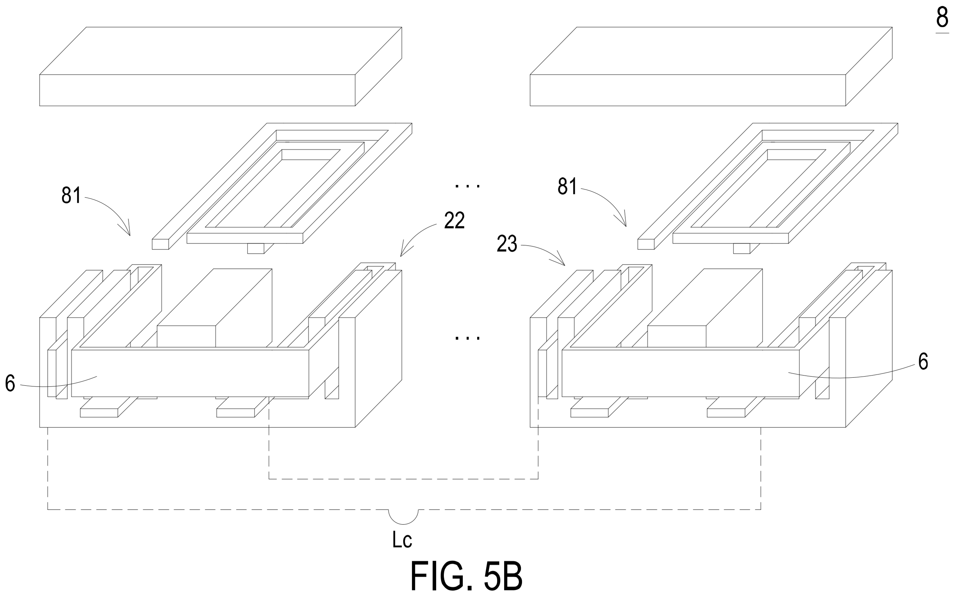

FIG. 5A is a schematic circuit view of an exemplary power converter including multiple modules connected in parallel. FIG. 5B is a schematic perspective view illustrating an integrated magnetic assembly according to a first embodiment of the present disclosure. As shown in FIGS. 5A and 5B, in this embodiment, an integrated magnetic assembly 8 is provided and applicable to a power converter 200 including at least two modules 20 connected in parallel. For example, the power converter 200 includes two modules 20 connected in parallel or three modules 20 connected in parallel. The circuitry topology of each module 20 is similar to that of the DC-DC converter 100 as shown in FIG. 1B, and is not redundantly described herein. The integrated magnetic assembly 8 includes at least two magnetic components 81 connected with each other. Preferably but not exclusively, each of the magnetic components 81 is implemented by employing the structures of the magnetic components 1, 1a 1b, 1c, 1d, 1e, 1f, and 1g. The tertiary windings 6 of the magnetic components 81 are connected in series and are used to link all modules 20 together. In an embodiment, as shown in FIG. 5B, the magnetic components 81 of the integrated magnetic assembly 8 are separated from each other. Each magnetic component 81 has a separate inductor or trace inductor to manage the magnetic coupling. In some other embodiments, the magnetic components 81 of the integrated magnetic assembly 8 are connected with each other (not shown). The first lateral column 22 of one magnetic component 81 and the second lateral column 23 of the adjacent magnetic component 81 are connected with each other to form a common column (not shown). The tertiary windings 6 of the magnetic components 81 are connected in series.

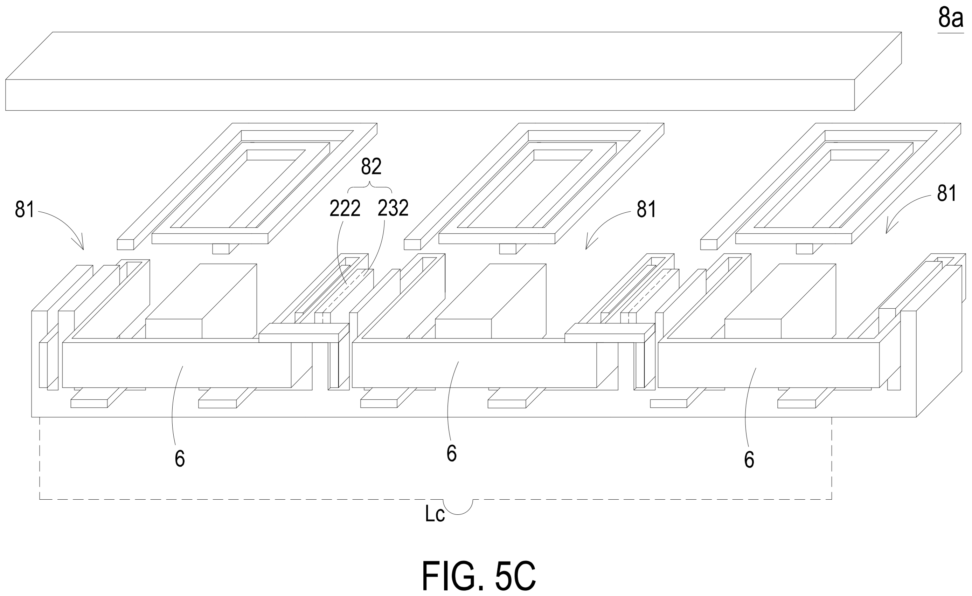

FIG. 5C is a schematic perspective view illustrating an integrated magnetic assembly according to a second embodiment of the present disclosure. In the embodiment, the structures, elements and functions of the integrated magnetic assembly 8a are similar to those of the integrated magnetic assembly 8 of FIG. 5B, and are not redundantly described herein. Compared with the integrated magnetic assembly 8 of FIG. 5B, the integrated magnetic assembly 8a includes three magnetic components 81. Preferably but not exclusively, each of the magnetic components 81 is implemented by employing the structures of the magnetic components 1, 1a 1b, 1c, 1d, 1e, 1f, and 1g. The three magnetic components 81 are combined into one piece. The second leg 222 of one magnetic component 81 and the fourth leg 232 of the adjacent magnetic component 81 are connected with each other to form a common column 82. The common column 82 is integrally formed into one piece. The tertiary windings 6 of the magnetic components 81 are connected in series. The separate inductors or trace inductors are incorporated to form an auxiliary inductor Lc to optimize the magnetic coupling. The auxiliary inductor Lc is used to fine-adjust the coupling among the output inductors.

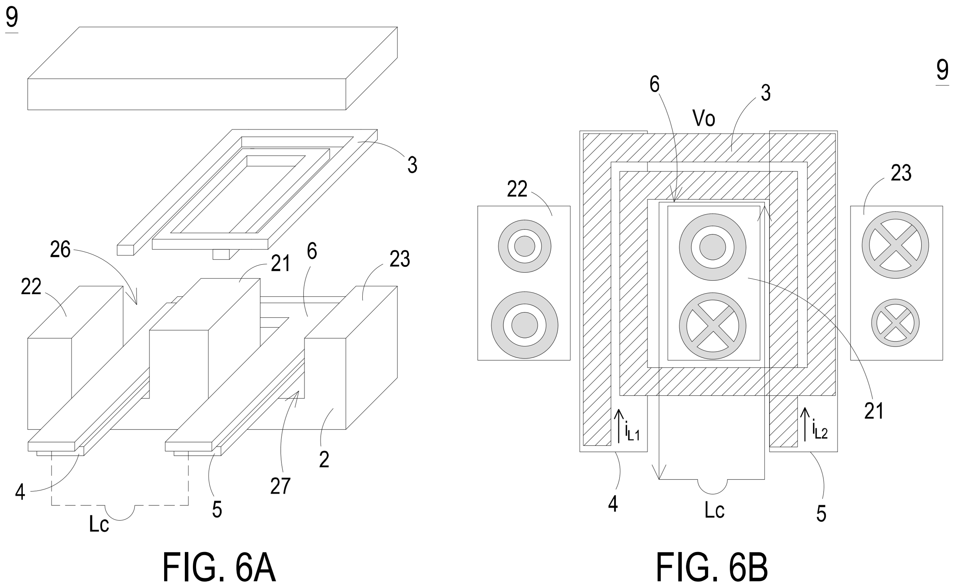

FIG. 6A is a schematic perspective view illustrating a magnetic component according to a nineth embodiment of the present disclosure. FIG. 6B is a schematic perspective view illustrating the directions of current drawn through the windings and the magnetic flux distribution on the magnetic component of FIG. 6A. The magnetic component 9 includes a magnetic core set 2, a primary winding 3, a first secondary winding 4, a second secondary winding 5 and a tertiary winding 6. The magnetic core set 2 includes a central column 21, a first lateral column 22 and a second lateral column 23. Compared with the magnetic components 1, 1a 1b, 1c, 1d, 1e, 1f, and 1g, the first lateral column 22 and the second lateral column 23 of the magnetic component 9 aren't divided into two legs, respectively. The primary winding 3 is wound on the central column 21 for at least two turns (i.e., portions of the primary winding 3 are wound through the first winding channel 26 and the second winding channel 27). Portion of the first secondary winding 4 is wound through the first winding channel 26 for at least half turn. Portion of the second secondary winding 5 is wound through the second winding channel 27 for at least half turn. The first secondary winding 4 is connected to the second secondary winding 5. The tertiary winding 6 is configured to adjust a coupling coefficient of the magnetic component 9. The tertiary winding 6 is wound on the central column 21 for at least one turn. The directions of current drawn through the windings and the magnetic flux distribution on the magnetic core set 2 are shown in FIG. 6B. Since portions of the primary winding 3, the two secondary windings 4, 5 and the tertiary winding 6 are interleaved in the first winding channel 26 and the second winding channel 27 and aligned with each other, the positive coupling effect is generated.

In some embodiments, the magnetic component 9 further includes an auxiliary inductor Lc configured to fine-adjust the coupling coefficient of the magnetic component 9. The auxiliary inductor Lc is a trace inductor or a discrete inductor and used to fine-adjust the coupling among the secondary inductors. Consequently, the positive coupling effect is enhanced.

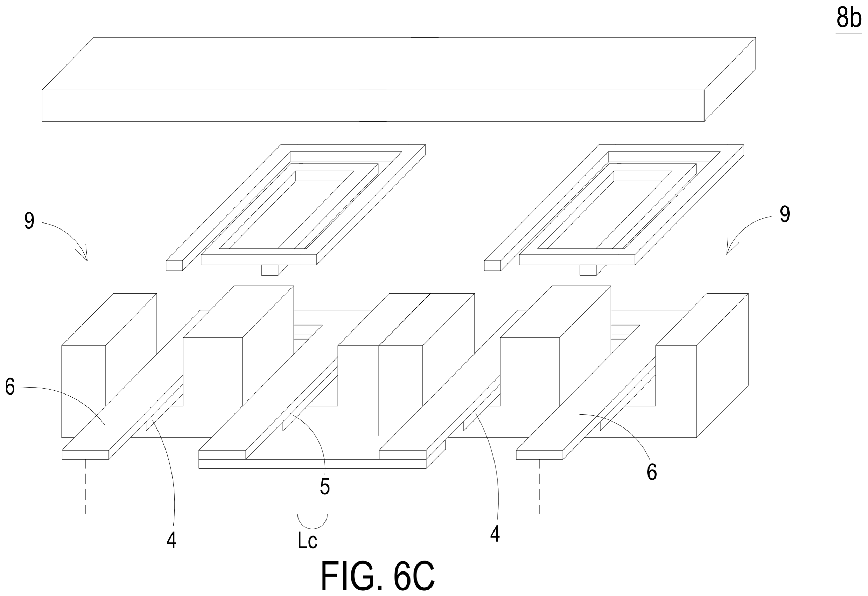

FIG. 6C is a schematic perspective view illustrating an integrated magnetic assembly according to a third embodiment of the present disclosure. In this embodiment, an integrated magnetic assembly 8b is provided and applicable to a power converter 200 shown in FIG. 5A. The integrated magnetic assembly 8b includes at least two magnetic components connected with each other. Preferably but not exclusively, each of the magnetic components is implemented by employing the structure of the magnetic component 9. The tertiary windings 6 of the magnetic components 9 are connected in series and are used to link all modules 20 (see FIG. 5A) together. In an embodiment, the magnetic components 9 of the integrated magnetic assembly 8b are separated from each other. Each magnetic component 9 has a separate inductor or trace inductor to manage the magnetic coupling. In some other embodiments, the magnetic components 9 of the integrated magnetic assembly 8b are connected with each other to form one piece structure. The separate inductor or trace inductor are incorporated to form an auxiliary inductor Lc to optimize the magnetic coupling. The auxiliary inductor Lc is used to fine-adjust the coupling among the output inductors.

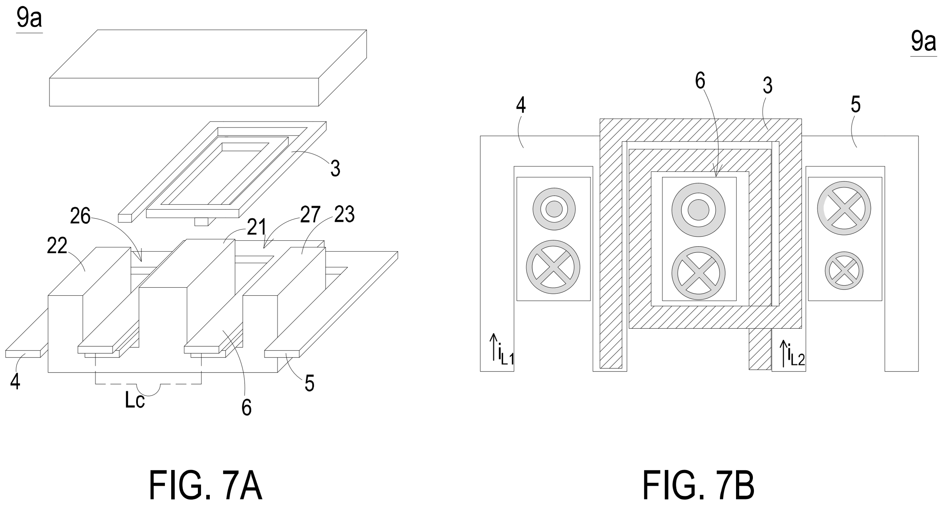

FIG. 7A is a schematic perspective view illustrating a magnetic component according to a tenth embodiment of the present disclosure. FIG. 7B is a schematic perspective view illustrating the directions of current drawn through the windings and the magnetic flux distribution on the magnetic component of FIG. 7A. In the embodiment, the structures, elements and functions of the magnetic component 9a are similar to those of the magnetic component 9 of FIG. 6A. The same reference numerals represent the same components, and for the sake of brevity, detailed descriptions of the same components are omitted. Compared with the magnetic component 9 of FIG. 6A, the first secondary winding 4 is wound on the first lateral column 22. The second secondary winding 5 is wound on the second lateral column 23. The first secondary winding 4 is connected to the second secondary winding 5. The tertiary winding 6 is configured to adjust a coupling coefficient of the magnetic component 9a. The tertiary winding 6 is wound on the central column 21 for at least one turn. The directions of current drawn through the windings and the magnetic flux distribution on the magnetic component are shown in FIG. 7B. Due to the positions and winding method of the windings of the magnetic component 9a, the negative coupling effect is generated.

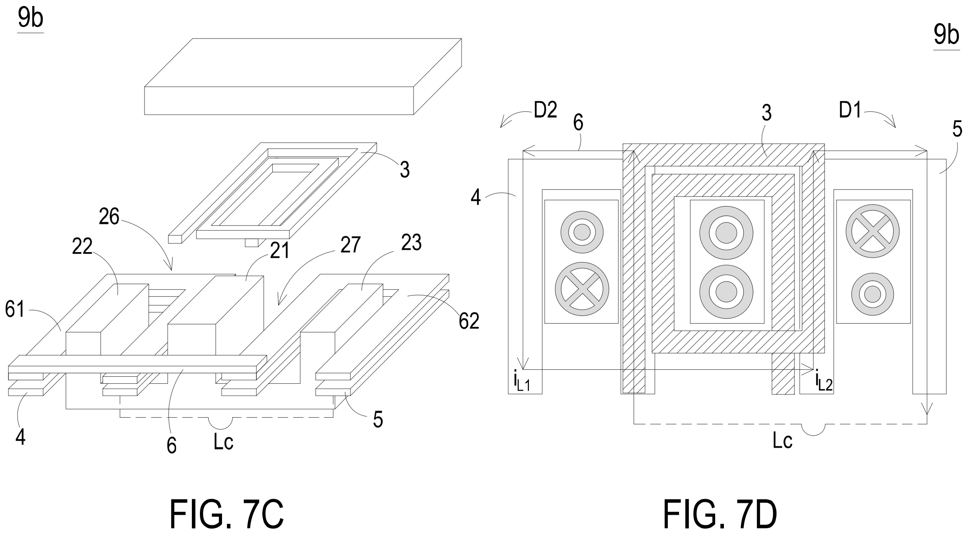

FIG. 7C is a schematic perspective view illustrating a magnetic component according to an eleventh embodiment of the present disclosure. FIG. 7D is a schematic perspective view illustrating the directions of current drawn through the windings and the magnetic flux distribution on the magnetic component of FIG. 7C. In the embodiment, the structures, elements and functions of the magnetic component 9b are similar to those of the magnetic component 9a of FIG. 7A, and are not redundantly described herein. Compared with the magnetic component 9a of FIG. 7A, the tertiary winding 6 includes a first segment 61 and a second segment 62. The first segment 61 is wound on the first lateral column 22. The second segment 62 is wound on the second lateral column 23. The current drawn through the first segment 61 in a second direction D2, and the current drawn through the second segment 62 in the first direction D1. The first direction D1 is opposite to the second direction D2. The tertiary winding 6 is configured to adjust a coupling coefficient of the magnetic component 9b. The auxiliary inductor Lc is configured to assist in fine-tuning the coupling coefficient.

The directions of current drawn through the windings and the magnetic flux distribution on the magnetic component are shown in FIG. 7D. Due to the positions and winding method of the windings of the magnetic component 9b, the advantages of adjusting negative coupling to positive coupling using tertiary winding 6 based on negatively coupled inductors in a PCB-based magnetic component is achieved.

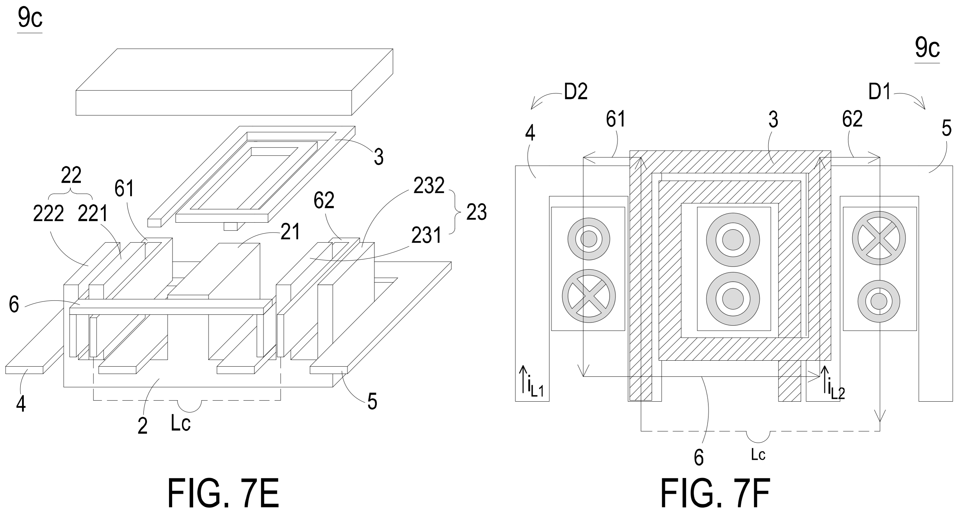

FIG. 7E is a schematic perspective view illustrating a magnetic component according to a twelfth embodiment of the present disclosure. FIG. 7F is a schematic perspective view illustrating the directions of current drawn through the windings and the magnetic flux distribution on the magnetic component of FIG. 7E. In the embodiment, the structures, elements and functions of the magnetic component 9c are similar to those of the magnetic component 9b of FIG. 7C, and are not redundantly described herein. Compared with the magnetic component 9b of FIG. 7C, the first lateral column 22 is divided into the first leg 221 and the second leg 222. The second lateral column 23 is divided into the third leg 231 and the fourth leg 232. The tertiary winding 6 includes a first segment 61 and a second segment 62. The first segment 61 is wound on one of the first leg 221 and the second leg 222. The second segment 62 is wound on one of the third leg 231 and the fourth leg 232. The current drawn through the first segment 61 in a second direction D2, and the current drawn through the second segment 62 in the first direction D1. The first direction D1 is opposite to the second direction D2. The tertiary winding 6 is configured to adjust a coupling coefficient of the magnetic component 9c. The auxiliary inductor Lc is configured to assist in fine-tuning the coupling coefficient. The directions of current drawn through the windings and the magnetic flux distribution on the magnetic component are shown in FIG. 7F. Due to the positions and winding method of the windings of the magnetic component 9c, the advantages of adjusting negative coupling to positive coupling using tertiary winding 6 based on negatively coupled inductors in a PCB-based magnetic component is achieved. In addition, the tertiary winding 6 only links part of the lateral columns 22, 23, thereby allowing selective coupling adjustments.

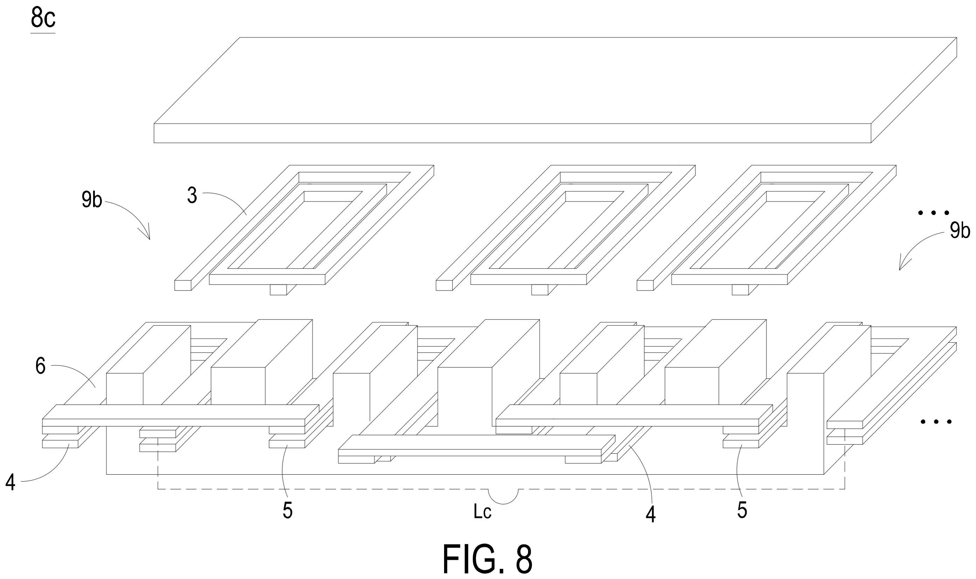

FIG. 8 is a schematic perspective view illustrating an integrated magnetic assembly according to a fourth embodiment of the present disclosure. In this embodiment, an integrated magnetic assembly 8c is provided and applicable to a power converter similar to that of the power converter 200 shown in FIG. 5A. The integrated magnetic assembly 8c includes at least two magnetic components 9b connected with each other. Preferably but not exclusively, each of the magnetic components 9b is implemented by employing the structures of the magnetic components 9, 9a, 9c. The tertiary windings 6 of the magnetic components 9a are connected in series and are used to link all modules 20 (see FIG. 5A) together. The three magnetic components 9b are connected to each other so as to form a one-piece structure. The tertiary windings 6 of the magnetic components 9b are connected in series. The separate inductors or trace inductors are incorporated to form an auxiliary inductor Lc to optimize the magnetic coupling. The auxiliary inductor Lc is used to fine-adjust the coupling among the output inductors. This integration leverages the previously described configuration of magnetic core assemblies 2, the primary windings 3, the secondary windings 4, 5 and the tertiary windings 6 to achieve enhanced coupling and performance across multiple modules, further optimizing the system's overall efficiency and scalability.

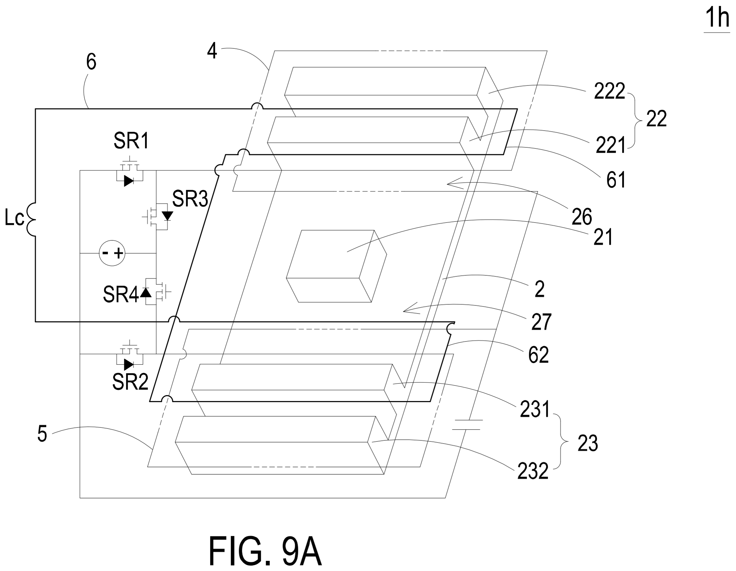

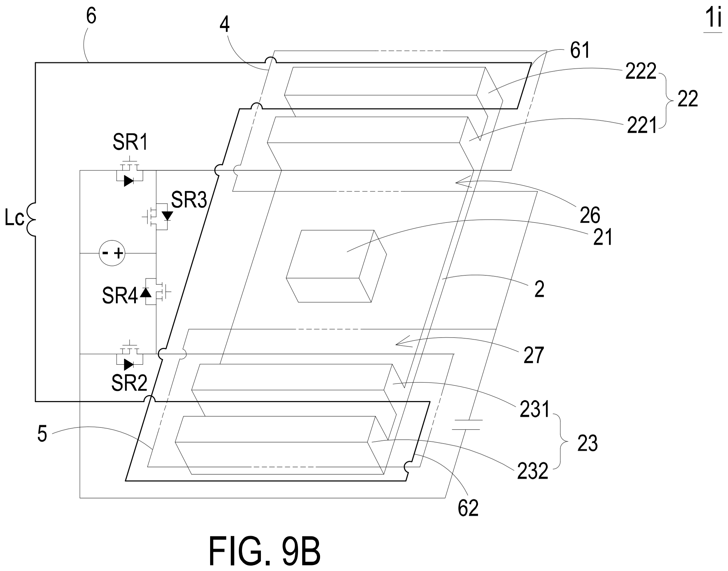

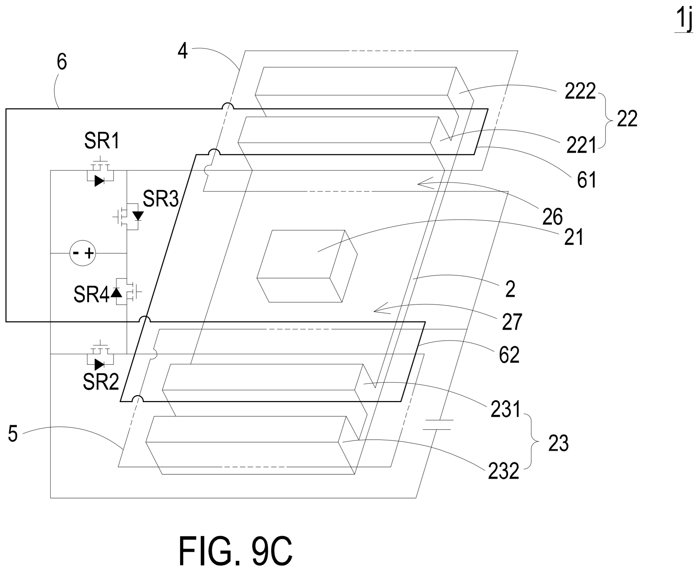

FIGS. 9A, 9B and 9C show magnetic components for the coupled inductors of a two-phase buck converter, respectively. In the embodiments, the secondary circuit of the two-phase buck converter includes four switches SR1, SR2, SR3, SR4. The magnetic components 1h, 1i, 1j are modified from the structures proposed in FIGS. 2A, 2B and 2C respectively. The configurations of the embodiments shown in FIGS. 9A, 9B and 9C comprise two inductor windings that implement positive coupling structures with minimized winding lengths to reduce winding losses. The tertiary windings 6 and the auxiliary inductors Lc are incorporated to allow for fine adjustment of the coupling, enabling a transition from positive coupling to negative coupling as required. The connection of the windings around the legs can follow the configurations shown in FIG. 9A or FIG. 9B. Furthermore, the auxiliary inductor can be eliminated by employing the partial coupling structure shown in FIG. 9C, which further optimizes the design for a smaller footprint and reduced loss, enhancing overall efficiency.

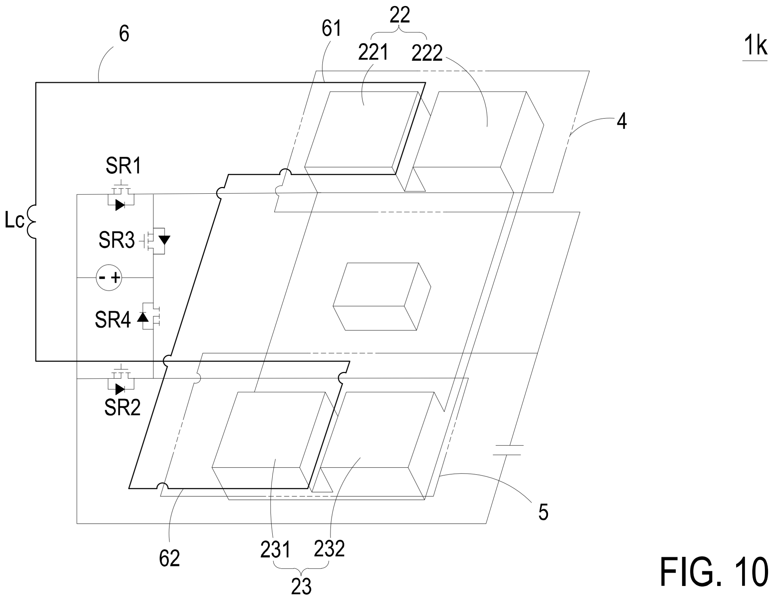

FIG. 10 shows a magnetic component for the coupled inductors of a two-phase buck converter. In the embodiment, the magnetic component 1k is modified from the structure proposed in FIG. 3. This configuration comprises two inductor windings that implements a positive coupling structure with minimized winding lengths to reduce winding losses. The tertiary winding 6, auxiliary inductor Lc and the legs 221, 222, 231, 232 of the lateral columns 22, 23 with partial coupling method are incorporated to allow for fine adjustment of the coupling, enabling a transition from positive coupling to negative coupling as required.

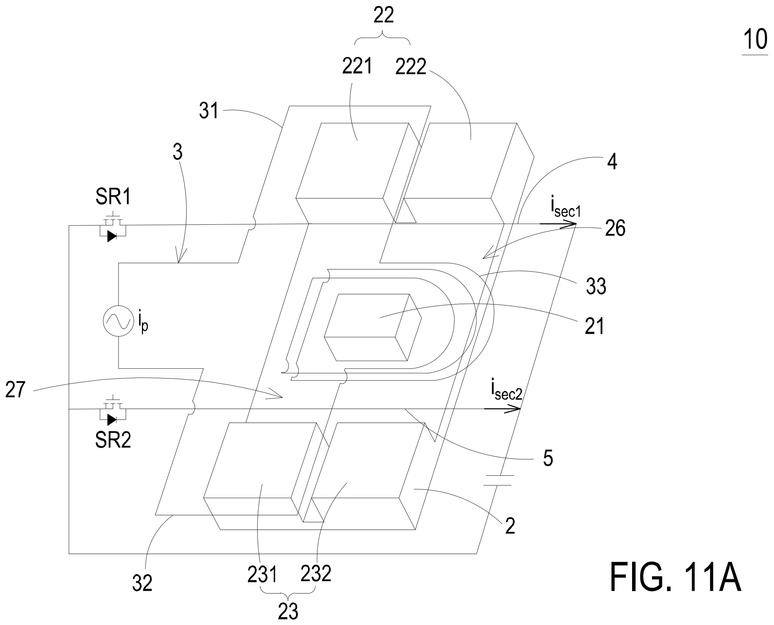

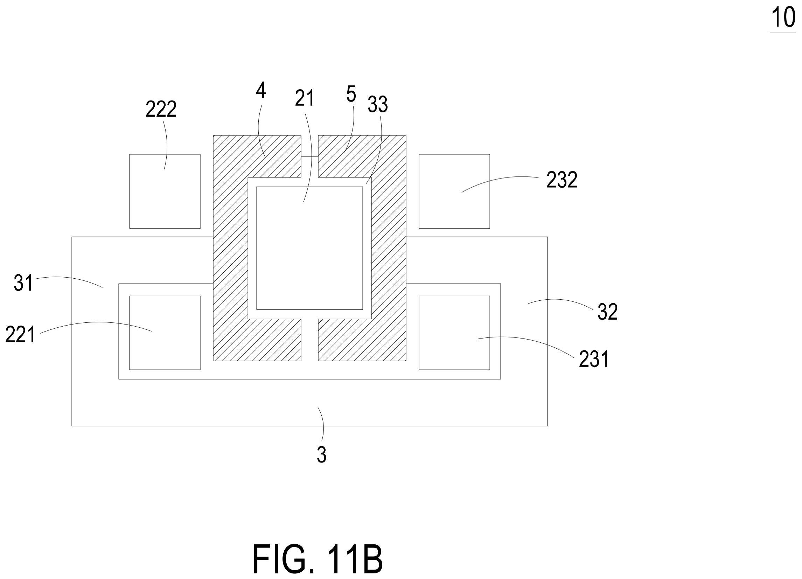

FIG. 11A is a schematic perspective view illustrating a magnetic component according to a thirteenth embodiment of the present disclosure. FIG. 11B is a schematic cross-sectional view illustrating the magnetic component of FIG. 11A. In the embodiment, the structures, elements and functions of the magnetic component 10 are similar to those of the magnetic component 1e of FIG. 3. The same reference numerals represent the same components, and for the sake of brevity, detailed descriptions of the same components are omitted. In the embodiment, the magnetic component 10 includes a magnetic core set 2, a primary winding 3, a first secondary winding 4 and a second secondary winding 5. The two lateral columns 22, 23 of the magnetic core set 2 are divided into two legs 221, 222, 231, 232, respectively. Compared with the magnetic component 1e of FIG. 3, the tertiary winding is omitted. In addition, the primary winding 3 includes a first segment 31, a second segment 32 and a third segment 33. The first segment 31 is wound on one of the first leg 221 and the second leg 222. The second segment 32 is wound on one of the third leg 231 and the fourth leg 232. The third segment 33 is wound on the central column 21 (i.e., portions of the primary winding 3 are wound through the first winding channel 26 and the second winding channel 27). Portion of the first secondary winding 4 is wound through the first winding channel 26 for at least half turn. Portion of the second secondary winding 5 is wound through the second winding channel 27 for at least half turn. In some embodiments, the first secondary winding 4 is wound on one of the first lateral column 22 and the central column 21 for at least one turn, and the second secondary winding 5 is wound on one of the central column 21 and the secondary lateral column 23 for at least one turn.

In this embodiment, preferably but not exclusively, the first cross-sectional area A1 of the first leg 221 is not equal to the second cross-sectional area A2 of the second leg 222. The third cross-sectional area A3 of the third leg 231 is not equal to the fourth cross-sectional area A4 of the fourth leg 232. In this embodiment, the magnetic component 10 is a fractional-winding planar transformer. Preferably but not exclusively, the turns ratio of the magnetic component 10 is 2.5:1. By using the magnetic component 10 with fractional-winding structure, the advantages of lower leakage inductance, lower winding and core losses, enhanced the power density and efficiency are achieved. Since the two lateral columns 22, 23 of the magnetic core set 2 are divided into two legs respectively to achieve partial coupling through the primary winding 3, the turns ratio of the magnetic component 10 can be adjusted as required.

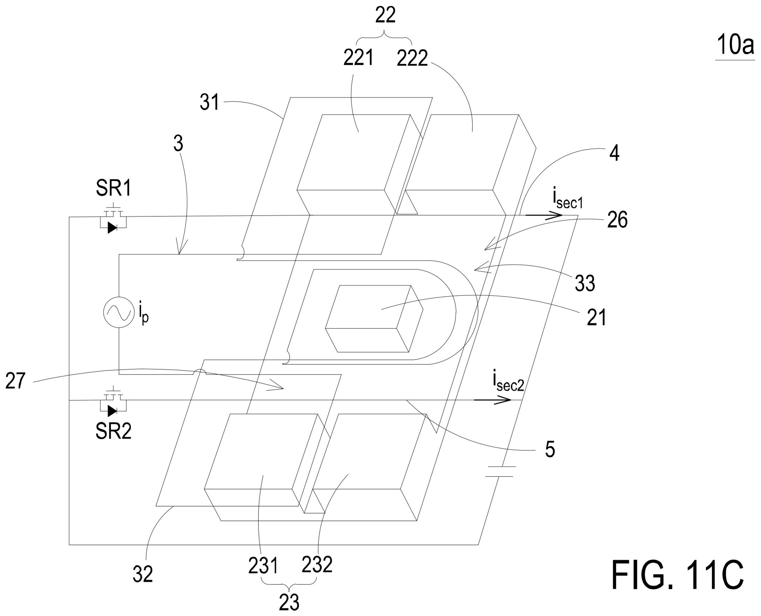

FIG. 11C is a schematic perspective view illustrating a magnetic component according to a fourteenth embodiment of the present disclosure. In the embodiment, the structures, elements and functions of the magnetic component 10a are similar to those of the magnetic component 10 of FIGS. 11A and 11B, and are not redundantly described herein. In the embodiment, the magnetic component 10a includes a magnetic core set 2, a primary winding 3, a first secondary winding 4 and a second secondary winding 5. The two lateral columns 22, 23 of the magnetic core set 2 are divided into two legs 221, 222, 231, 232 respectively. Compared with the magnetic component 10 of FIG. 11A, the winding method of the primary winding 3 is different. In this embodiment, the current drawn through the first segment 31 and the third segment 33 in a second direction D2. The current drawn through the second segment 32 in a first direction D1. The first direction D1 is opposite to the second direction D2. In this embodiment, the magnetic component 10a is a fractional-winding planar transformer. Preferably but not exclusively, the turns ratio of the magnetic component 10a is 2.5:1. By using the magnetic component 10a with fractional-winding structure, the advantages of lower leakage inductance, lower winding and core losses, enhanced the power density and efficiency are achieved. Since the two lateral columns 22, 23 of the magnetic core set 2 are divided into two legs respectively to achieve partial coupling through the primary winding 3, the turns ratio of the magnetic component 10a can be adjusted as required.

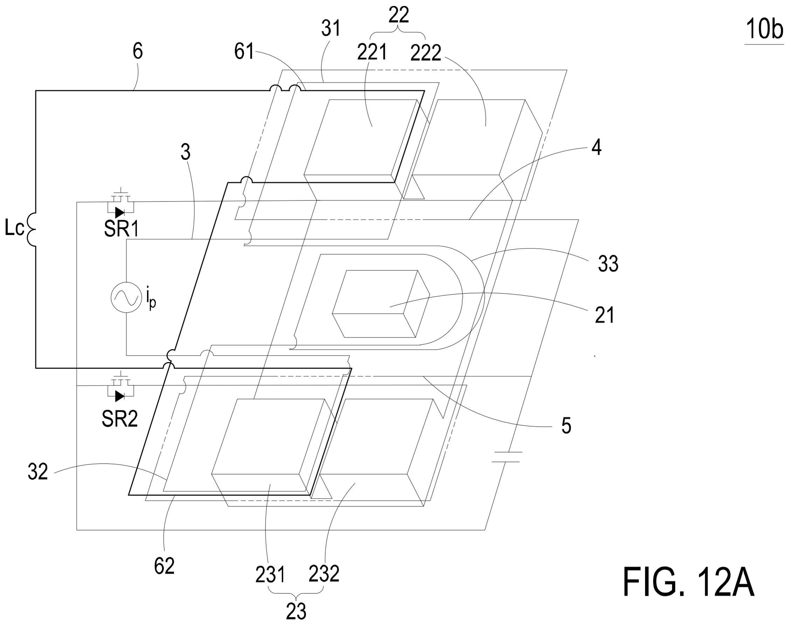

FIG. 12A is a schematic perspective view illustrating a magnetic component according to a fifteenth embodiment of the present disclosure. In the embodiment, the structures, elements and functions of the magnetic component 10b are similar to those of the magnetic component 10a of FIG 11C. The same reference numerals represent the same components, and for the sake of brevity, detailed descriptions of the same components are omitted. In the embodiment, the magnetic component 10c includes a magnetic core set 2, a primary winding 3, a first secondary winding 4, a second secondary winding 5 and a tertiary winding 6. The two lateral columns 22, 23 of the magnetic core set 2 are divided into two legs 221, 222, 231, 232 respectively. Compared with the magnetic component 10a of FIG. 11C, the magnetic component 10b further includes a tertiary winding 6. The primary winding 3 includes a first segment 31, a second segment 32 and a third segment 33. The first segment 31 is wound on the first leg 221. The second segment 32 is wound on the third leg 231. The third segment 33 is wound on the central column 21 (i.e., portions of the primary winding 3 are wound through the first winding channel 26 and the second winding channel 27). Portion of the first secondary winding 4 is wound through the first winding channel 26 for at least half turn. Portion of the second secondary winding 5 is wound through the second winding channel 27 for at least half turn. In some embodiments, the first secondary winding 4 is wound on one of the first lateral column 22 and the central column 21 for at least one turn, and the second secondary winding 5 is wound on one of the central column 21 and the secondary lateral column 23 for at least one turn. The tertiary winding 6 includes a first segment 61 and a second segment 62. The first segment 61 is wound on the first leg 221. The second segment 62 is wound on the third leg 231. The two lateral columns 22, 23 of the magnetic core set 2 are divided into two legs 221, 222, 231, 232 respectively to achieve partial coupling through the tertiary winding 6. Consequently, the coupling coefficient of the magnetic component 10b is adjusted and/or enhanced.

In addition, the magnetic component 10b is a fractional-winding planar transformer. Preferably but not exclusively, the turns ratio of the magnetic component 10b is 2.5:1. By using the magnetic component 10b with fractional-winding structure, the advantages of lower leakage inductance, lower winding and core losses, enhanced power density and efficiency are achieved. Since the two lateral columns 22, 23 of the magnetic core set 2 are divided into two legs respectively to achieve partial coupling through the primary winding 3, the turns ratio of the magnetic component 10b can be adjusted as required.

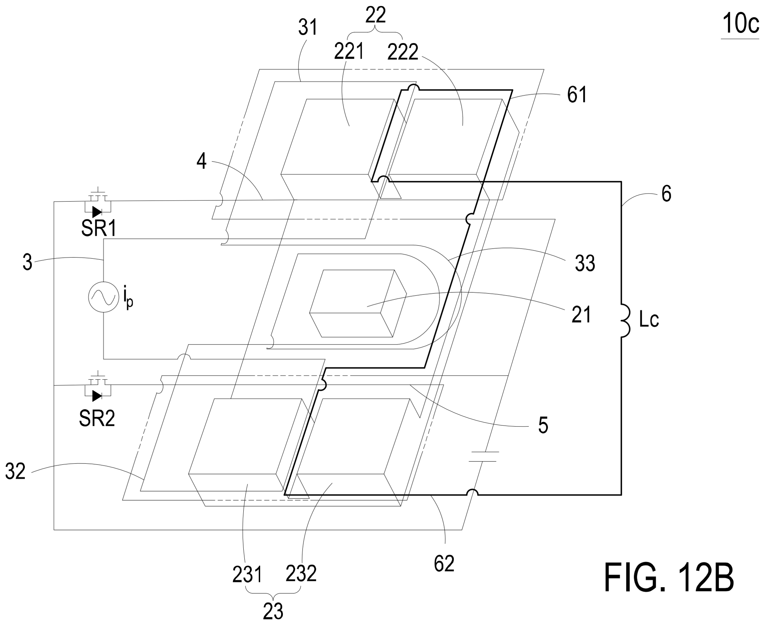

FIG. 12B is a schematic perspective view illustrating a magnetic component according to a sixteenth embodiment of the present disclosure. In the embodiment, the structures, elements and functions of the magnetic component 10c are similar to those of the magnetic component 10b of FIG 12A, and are not redundantly described herein. Compared with the magnetic component 10b of FIG. 12A, the positions of the first segment 61 and the second segment 62 of the tertiary winding 6 are different. The first segment 31 of the primary winding 3 is wound on the first leg 221. The second segment 32 of the primary winding 3 is wound on the third leg 231. The third segment 33 of the primary winding 3 is wound on the central column 21. The first segment 61 of the tertiary winding 6 is wound on the second leg 222. The second segment 62 of the tertiary winding 6 is wound on the fourth leg 232. The two lateral columns 22, 23 of the magnetic core set 2 are divided into two legs 221, 222, 231, 232 respectively to achieve partial coupling through the tertiary winding 6. Consequently, the coupling coefficient of the magnetic component 10c is adjusted and/or enhanced.

In addition, the magnetic component 10c is a fractional-winding planar transformer. Preferably but not exclusively, the turns ratio of the magnetic component 10c is 2.5:1. By using the magnetic component 10c with fractional-winding structure, the advantages of lower leakage inductance, lower winding and core losses, enhanced power density and efficiency are achieved. Since the two lateral columns 22, 23 of the magnetic core set 2 are divided into two legs respectively to achieve partial coupling through the primary winding 3, the turns ratio of the magnetic component 10c can be adjusted as required.

From above descriptions, the present disclosure provides a magnetic component and an integrated magnetic assembly for achieving adjustable and/or enhanced coupling between coupled inductors in the magnetic component by using direct windings and direct magnetic core structures. In addition, the magnetic component and the integrated magnetic assembly of the present disclosure can achieve negative coupling while ensuring the shortest winding path, and employ direct windings and direct magnetic core structures to minimize winding losses in CDR topologies while allowing the coupling coefficient to be fine-tuned through the addition of extra winding or inductor. This adjustment enables a transition from positive coupling to negative coupling, improving the transient response of DC-DC converters. Conversely, the magnetic component and the integrated magnetic assembly of the present disclosure also allow for the conversion of negative coupling to positive coupling to reduce output current ripples. The magnetic component and the integrated magnetic assembly of the present disclosure can also achieve the above-mentioned objectives without adding additional inductors, thus reducing overall losses and minimizing the footprint and size.

Furthermore, the magnetic component and the integrated magnetic assembly of the present disclosure can be applied to multi-module configurations, providing enhanced performance by optimizing inductive coupling across multiple modules, contributing to improved efficiency and compact system design. In some embodiments, the magnetic component is a fractional-winding planar transformer. Since the two lateral columns of the magnetic core set are divided into two legs respectively to achieve partial coupling through the primary winding, the turns ratio of the magnetic component can be adjusted as required. By using the magnetic component with fractional-winding structure, the advantages of lower leakage inductance, lower winding and core losses, enhanced power density and efficiency are achieved.

## Claims

1. A magnetic component (1 , 1a , 1b , 1c , 1d , 1e , 1f , 1g , 10b 10c), **characterized by** comprising:
a magnetic core set (2), comprising a central column (21), a first lateral column (22) and a second lateral column (23), wherein a first winding channel (26) is formed between the central column (21) and the first lateral column (22), and a second winding channel (27) is formed between the central column (21) and the second lateral column (23), wherein the first lateral column (22) comprises a first leg (221), a second leg (222) and a first sub-winding channel (223) disposed between the first leg (221) and the second leg (222), and the second lateral column (23) comprises a third leg (231), a fourth leg (232) and a second sub-winding channel (233) disposed between the third leg (231) and the fourth leg (232);
a primary winding (3), comprising portions wound through the first winding channel (26) and the second winding channel (27);
a first secondary winding (4), comprising a portion wound through the first winding channel (26);
a second secondary winding (5), comprising a portion wound through the second winding channel (27), and connected to the first secondary winding (4); and
a tertiary winding (6), comprising a first segment (61) wound on one of the first leg (221) and the second leg (222) and a second segment (62) wound on one of the third leg (231) and the fourth leg (232).

2. The magnetic component (1 , 1a , 1b , 1c , 1d , 1e , 1f , 1g , 10b , 10c) according to claim 1, further comprising an auxiliary inductor (Lc) configured to adjust a coupling coefficient of the magnetic component (1 , 1a , 1b , 1c , 1d , 1e , 1f , 1g , 10b , 10c),
wherein the auxiliary inductor (Lc) is a trace inductor electrically connected to the tertiary winding (6), or wherein the auxiliary inductor (Lc) comprises an inductor magnetic core (7) having a channel (71) passing therethrough, and a portion of the tertiary winding (6) is wound through the channel (71) of the inductor magnetic core (7), or wherein the auxiliary inductor (Lc) is a discrete inductor and comprises an inductor magnetic core and an inductor winding,
wherein the current flows through the first segment of the tertiary winding in a first direction (D1), and the current flows through the second segment of the tertiary winding in a second direction (D2), wherein the first direction (D1) and the second direction (D2) are opposite to each other.

3. The magnetic component (1 , 1a , 1b , 1c , 1d , 1e , 1f , 1g , 10b , 10c) according to claim 1 or 2, wherein the primary winding (3) is wound on the central column (21), or wound on the first lateral column (22) and the second lateral column (23), or wound on one of the first leg (221) and the second leg (222) and one of the third leg (231) and the fourth leg (232), wherein the first secondary winding (4) is wound on the central column (21) or the first lateral column (22), wherein the second secondary winding (5) is wound on the central column (21) or the second lateral column (23).

4. The magnetic component (1 , 1a , 1b , 1c , 1d , 1e , 1f , 1g , 10b , 10c) according to any one of preceding claims 1 to 3, wherein the primary winding (3) is wound on the central column (21), the first secondary winding (4) is wound on the first lateral column (22), the second secondary winding (5) is wound on the second lateral column (23), the first segment (61) of the tertiary winding (6) is wound on the first leg (221), and the second segment (62) of the tertiary winding (6) is wound on the third leg (231).

5. The magnetic component (1 , 1a , 1b , 1c , 1d , 1e , 1f , 1g , 10b , 10c) according to any one of preceding claims 1 to 3, wherein the primary winding (3) comprises a first segment (31) wound on the first lateral column (22) and a second segment (32) wound on the second lateral column (23), the first secondary winding (4) is wound on the first lateral column (22), the second secondary winding (5) is wound on the second lateral column (23), the first segment (61) of the tertiary winding (6) is wound on the first leg (221), and the second segment (62) of the tertiary winding (6) is wound on the third leg (231).

6. The magnetic component (1 , 1a , 1b , 1c , 1d , 1e , 1f , 1g , 10b , 10c) according to any one of preceding claims 1 to 3, wherein the primary winding (3) is wound on the central column (21), the first secondary winding (4) is wound on the first lateral column (22), the second secondary winding (5) is wound on the second lateral column (23), the first segment (61) of the tertiary winding (6) is wound on the second leg (221), and the second segment (62) of the tertiary winding (6) is wound on the fourth leg (231).

7. The magnetic component (1 , 1a , 1b , 1c , 1d , 1e , 1f , 1g , 10b , 10c) according to any one of preceding claims 1 to 3, wherein the primary winding (3) comprises:
a first segment (31) wound on one of the first leg (221) and the second leg (222);
a second segment (32) wound on one of the third leg (231) and the fourth leg (232); and
a third segment (33) wound on the central column (21);
wherein the first secondary winding (4) is wound on the first lateral column (22) for at least one turn, or the portion of the first secondary winding (4) is wound through the first winding channel (26) between the central column (21) and the first lateral column (22), and wherein the second secondary winding (5) is wound on one of the second lateral column (23) and the central column (21) for at least one turn, or the portion of the second secondary winding (5) is wound through the second winding channel (27) between the central column (21) and the second lateral column (23);
wherein the first segment (61) of the tertiary winding (6) is wound on one of the first leg (221) and the second leg (222), and the second segment (61) of the tertiary winding (6) is wound on one of the third leg (231) and the fourth leg (232).

8. The magnetic component (1 , 1a , 1b , 1c , 1d , 1e , 1f , 1g , 10b , 10c) according to any one of preceding claims 1 to 7, further comprising at least one printed circuit board, wherein at least one of the primary winding (3), the first secondary winding (4), the second secondary winding (5) and the tertiary winding (6) is disposed in the at least one printed circuit board,
wherein the magnetic core set (2) comprises a first plate (24) and a second plate (25), wherein the central column (21), the first lateral column (22) and the second lateral column (23) are connected between the first plate (24) and the second plate (25) respectively, and the central column (21) is disposed between the first lateral column (22) and the second lateral column (23), wherein the magnetic core set (2) comprises a first side (201), a second side (202), a third side (203) and a fourth side (204), the first side (201) and the second side (202) are opposite to each other, and the third side (203) and the fourth side (204) are opposite to each other, wherein the first sub-winding channel (223) and the second sub-winding channel (233) are in parallel with the third side (203) and the fourth side (204), or the first sub-winding channel (223) and the second sub-winding channel (233) are in vertical to the third side (203) and the fourth side (204).

9. An integrated magnetic assembly (8, 8a), **characterized by** comprising:
at least two magnetic components (81), connected with each other, wherein each of the at least two magnetic components (81) comprises:
a magnetic core set (2), comprising a central column (21), a first lateral column (22) and a second lateral column (23), wherein a first winding channel (26) is formed between the central column (21) and the first lateral column (22), a second winding channel (27) is formed between the central column (21) and the second lateral column (23), wherein the first lateral column (22) comprises a first leg (221), a second leg (222) and a first sub-winding channel (223) disposed between the first leg (221) and the second leg (222), and the second lateral column (23) comprises a third leg (231), a fourth leg (232) and a second sub-winding channel (233) disposed between the third leg (231) and the fourth leg (232);
a primary winding (3), comprising portions wound through the first winding channel (26) and the second winding channel (27);
a first secondary winding (4), comprising a portion wound through the first winding channel (26);
a second secondary winding (5), comprising a portion wound through the second winding channel (27), and connected to the first secondary winding (4); and
a tertiary winding (6), comprising a first segment (61) wound on one of the first leg (221) and the second leg (222) and a second segment (62) wound on one of the third leg (231) and the fourth leg (232);
wherein the first lateral column (22) of one magnetic component (81) and the second lateral column (23) of the adjacent magnetic component (81) are connected with each other to form a common column (82);
wherein the tertiary windings (6) of the at least two magnetic components (8) are connected in series.

10. A magnetic component (9, 9a, 9b), **characterized by** comprising:
a magnetic core set (2), comprising a central column (21), a first lateral column (22) and a second lateral column (23), wherein a first winding channel (26) is formed between the central column (21) and the first lateral column (22), and a second winding channel (27) is formed between the central column (21) and the second lateral column (23);
a primary winding (3), comprising portions wound through the first winding channel (26) and the second winding channel (27);
a first secondary winding (4), comprising a portion wound through the first winding channel (26);
a second secondary winding (5), comprising a portion wound through the second winding channel (27), and connected to the first secondary winding (4); and
a tertiary winding (6), wound on the central column (21) or wound on the first lateral column (22) and the second lateral column (23).

11. An integrated magnetic assembly (8b, 8c), **characterized by** comprising:
at least two magnetic components (9, 9a, 9b), connected with each other, wherein each of the at least two magnetic components (9, 9a, 9b) comprises:
a magnetic core set (2), comprising a central column (21), a first lateral column (22) and a second lateral column (23), wherein a first winding channel (26) is formed between the central column (21) and the first lateral column (22), and a second winding channel (27) is formed between the central column (21) and the second lateral column (23);
a primary winding (3), comprising portions wound through the first winding channel (26) and the second winding channel (27);
a first secondary winding (4), comprising a portion wound through the first winding channel (26);
a second secondary winding (5), comprising a portion wound through the second winding channel (27), and connected to the first secondary winding (4); and
a tertiary winding (6), wound on the central column (21) or wound on the first lateral column (22) and the second lateral column (23);
wherein the first lateral column (22) of one magnetic component (9, 9a, 9b) and the second lateral column (23) of the adjacent magnetic component (9, 9a, 9b) are connected with each other to form a common column;
wherein the tertiary windings (6) of the at least two magnetic components (9, 9a, 9b) are connected in series.

12. A magnetic component (10, 10a), **characterized by** comprising:
a magnetic core set (2), comprising a central column (21), a first lateral column (22) and a second lateral column (23), wherein a first winding channel (26) is formed between the central column (21) and the first lateral column (22), and a second winding channel (27) is formed between the central column (21) and the second lateral column (23), wherein the first lateral column (22) comprises a first leg (221), a second leg (222) and a first sub-winding channel (223) disposed between the first leg (221) and the second leg (222), and the second lateral column (23) comprises a third leg (231), a fourth leg (232) and a second sub-winding channel (233) disposed between the third leg (231) and the fourth leg (232);
a primary winding (3), wound on the central column (21), and wound on one of the first leg (221) and the second leg (222) and one of the third leg (231) and the fourth leg (232);
a first secondary winding (4), comprising a portion wound through the first winding channel (26); and
a second secondary winding (5), comprising a portion wound through the second winding channel (27), and connected to the first secondary winding (4).

13. The magnetic component (10, 10a) according to claim 12, wherein the first secondary winding (4) is wound on the central column (21) or the first lateral column (22), and the second secondary winding (5) is wound on the central column (21) or the second lateral column (23),
wherein the magnetic component (10, 10a) further comprises:
a tertiary winding (6), wherein the tertiary winding (6) comprises a first segment (61) wound on one of the first leg (221) and the second leg (222) and a second segment (62) wound on one of the third leg and (231) the fourth leg (232); and
an auxiliary inductor (Lc) configured to adjust a coupling coefficient of the magnetic component (10, 10a), wherein the auxiliary inductor (Lc) is a trace inductor electrically connected to the tertiary winding (6), or wherein the auxiliary inductor (Lc) comprises an inductor magnetic core (7) having a channel (71) passing therethrough, and a portion of the tertiary winding (6) is wound through the channel (71) of the inductor magnetic core (7), or wherein the auxiliary inductor (Lc) is a discrete inductor and comprises an inductor magnetic core and an inductor winding,
wherein the current flows through the first segment (61) of the tertiary winding (6) in a first direction (D1), and the current flows through the second segment (62) of the tertiary winding (6) in a second direction (D2), wherein the first direction (D1) and the second direction (D2) are opposite to each other.

14. The magnetic component (10, 10a) according to claim 12, wherein the primary winding (3) comprises:
a first segment (31) wound on one of the first leg (221) and the second leg (222);
a second segment (32) wound on one of the third leg (231) and the fourth leg (232); and
a third segment (33) wound on the central column (21);
wherein the first secondary winding (4) is wound on the first lateral column (22) or the central column (21), or the portion of the first secondary winding (4) is wound through the first winding channel (26) between the central column (21) and the first lateral column (22); and
wherein the second secondary winding (5) is wound on the second lateral column (23) or the central column (21), or the portion of the second secondary winding (5) is wound through the second winding channel (27) between the central column (21) and the second lateral column (23),
wherein the magnetic component (10, 10a) further comprises at least one printed circuit board, wherein at least one of the primary winding (3), the first secondary winding (4) and the second secondary winding (5) is disposed in the at least one printed circuit board,
wherein the magnetic core set (2) further comprises a first plate (24) and a second plate (25), wherein the central column (21), the first lateral column (22) and the second lateral column (23) are connected between the first plate (24) and the second plate (25) respectively, and the central column (21) is disposed between the first lateral column (22) and the second lateral column (23), wherein the magnetic core set (2) comprises a first side (201), a second side (202), a third side (203) and a fourth side (204), the first side (201) and the second side (202) are opposite to each other, and the third side (203) and the fourth side (204) are opposite to each other, wherein the first sub-winding channel (26) and the second sub-winding channel (27) are in parallel with the third side (203) and the fourth side (204), or the first sub-winding channel (26) and the second sub-winding channel (27) are in vertical to the third side (203) and the fourth side (204).

15. A magnetic component (1h, 1i, 1j, 1k), **characterized by** comprising:
a magnetic core set (2), comprising a central column (21), a first lateral column (22) and a second lateral column (23), wherein a first winding channel (26) is formed between the central column (21) and the first lateral column (22), and a second winding channel (27) is formed between the central column (21) and the second lateral column (23), wherein the first lateral column (22) comprises a first leg (221), a second leg (222) and a first sub-winding channel (223) disposed between the first leg (221) and the second leg (222), and the second lateral column (23) comprises a third leg (231), a fourth leg (232) and a second sub-winding channel (233) disposed between the third leg (231) and the fourth leg (232);
a first inductor winding, comprising a portion wound through the first winding channel (26);
a second inductor winding, comprising a portion wound through the second winding channel (27), and connected to the first inductor winding; and
a tertiary winding (6), comprising a first segment (61) wound on one of the first leg (221) and the second leg (222) and a second segment (62) wound on one of the third leg (231) and the fourth leg (232).
